# EUROPÄISCHE PATENTSCHRIFT

(11) **EP 3 894 458 B1**
(45) Veröffentlichungstag und Bekanntmachung des Hinweises auf die Patenterteilung: **28.12.2022**
(21) Anmeldenummer: 19816561.5
(22) Anmeldetag: 28.11.2019
(51) Int. Cl.: C08G 59/68, C08G 65/10, C08G 65/12, C08G 65/20, C09J 163/00, C09J 171/00, C08J 3/28, C08K 5/41, C08K 5/56, C09D 163/00, C09D 171/00, C08G 59/40

(54) **KATIONISCH HAERTBARE MASSE UND VERFAHREN ZUM FUEGEN, VERGIESSEN UND BESCHICHTEN VON SUBSTRATEN UNTER VERWENDUNG DER MASSE**
CATIONICALLY CURABLE MASS AND METHOD FOR JOINING, CASTING AND COATING SUBSTRATES USING THE MASS
MATIÈRE CATIONIQUEMENT DURCISSABLE ET PROCÉDÉ D'ASSEMBLAGE, DE COULÉE ET DE REVÊTEMENT DE SUBSTRATS À L'AIDE DE LADITE MATIÈRE

(30) Priorität: 10.12.2018 DE 102018131513
(43) Veröffentlichungstag der Anmeldung: 20.10.2021
(73) Patentinhaber: DELO Industrie Klebstoffe GmbH & Co. KGaA, 86949 Windach (DE)
(72) Erfinder: UHL, Gerald, 86949 Windach (DE); ANSELMENT, Timo, 86949 Windach (DE); SCHOLZ, Michael, 86949 Windach (DE); ZINK, Sebastian, 86949 Windach (DE); KREUL, Kilian, 86949 Windach (DE)
(74) Vertreter: Prinz & Partner mbB
(86) Internationale Anmeldenummer: PCT/EP2019/082833
(87) Internationale Veröffentlichungsnummer: WO 2020/120144

(56) Entgegenhaltungen:
- EP-A2- 0 764 691
- CN-A- 105 273 167
- US-A- 4 849 320

## Beschreibung

### GEBIET DER ERFINDUNG

Die Erfindung betrifft eine kationisch härtbare Masse, die durch Bestrahlen mit aktinischer Strahlung aktivierbar ist, und ein Verfahren zum Fügen, Vergießen und Beschichten von Substraten unter Verwendung der Masse.

### TECHNISCHER HINTERGRUND

Kationisch polymerisierbare Massen mit Photoinitiatoren auf Basis von Sulfonium- und lodoniumsalzen gehören seit vielen Jahren zum Stand der Technik. Eine Übersicht geeigneter Photoinitiatoren kann den Publikationen von J.V. Crivello und K. Dietliker in "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998 entnommen werden.

Als Anionen für die Sulfonium- oder lodoniumsalze können HSO₄⁻, PF₆⁻, SbF₆⁻, AsF₆⁻, Cl⁻, Br⁻, I⁻, ClO₄⁻, PO₄⁻, SO₃CF₃⁻, Tosylat oder ein Borat-Anion, wie etwa BF₄⁻und B(C₆F₅)₄⁻ dienen. Ebenfalls geeignet sind Aluminatanionen, wie sie in der der EP 3 184 569 A1 oder der WO 2017 035 551 A1 offenbart werden.

Die DE 43 40 949 A1 offenbart kationisch härtbare Massen, die durch aktinische Strahlung voraktivierbar sind und innerhalb von 24 Stunden bei Raumtemperatur ohne weitere Energiezufuhr aushärten. Nachteilig an den bekannten Massen ist, dass durch die zugesetzten basischen Verzögerer der Festigkeitsaufbau nur langsam stattfindet und nach dem Fügen oft keine ausreichende Handlingsfestigkeit zur Verfügung steht. Bauteile, welche mit diesen Massen gefügt wurden, benötigen somit lange Wartezeiten oder Fixierhilfen, bis diese in nachfolgenden Schritten weiterverarbeitet werden können.

Ein Fügeverfahren unter Verwendung solcher Massen ist aus der EP 0 388 775 A1 bekannt. Darin wird eine kationisch polymerisierbare Masse mit Licht einer Wellenlänge von 400 bis 600 nm solange aktiviert, bis die Masse nach Beendigung der Bestrahlung noch für mehr als 30 Sekunden uneingeschränkt applizierbar ist.

Die CN 105 273 167 A beschreibt den Einsatz von Ferroceniumsalzen als Sensibilisator für die Photopolymerisation von kationisch härtbaren Massen mit Photoinitiatoren auf Basis von lodoniumsalzen. Die Ferroceniumsalze werden dabei in einem Unterschuss eingesetzt und erlauben die Initiierung der Polymerisation durch den lodononiuminitiator unter Bestrahlung mit sichtbarem Licht. Es wird jedoch keine sequentielle Belichtung bei unterschiedlichen Wellenlängen vorgeschlagen.

In dem wissenschaftlichen Artikel von Kostanski et al., "Cationic polymerisation using mixed cationic photoinitiator systems" aus Designed Monomers and Polymers 2007, Vol. 10, No. 4, Seiten 327-345, werden Mischungen von Sulfonium- oder lodoniumsalzen mit Ferroceniumsalzen beschrieben. Auch hier dienen die Ferroceniumsalze als Sensibilisatoren für den Photoinitiator auf Basis des Sulfonium- oder Iodoniumsalzes. Zur Bestrahlung wird eine Quecksilber-Hochdruckdampflampe verwendet. Die verschiedenen Photoinitiatoren werden jedoch nicht sequentiell bei spezifischen Wellenlängen aktiviert.

Der wissenschaftliche Artikel von Chen et al., "A synergistic effect of a ferrocenium salt on the diaryliodonium salt-induced visible-light curing of bisphenol-A epoxy resin" aus RSC Adv., 2015, 5, 33171 beschreibt ebenfalls einen Synergismus zwischen lodoniumsalzen und Ferroceniumsalzen. Auch in diesem Fall wird der Photoinitiator auf Basis des lodoniumsalzes im Überschuss eingesetzt. Die Autoren beschreiben eine höhere Umsatzrate durch Zusatz des Ferroceniumsalzes. Die Bestrahlung erfolgt jedoch mit einer Halogenlampe unter gleichzeitiger Aktivierung des lodoniumsalzes und des Ferroceniumsalzes.

Die US 4 849 320 A beschreibt ein photolithographisches Verfahren unter Einsatz einer Masse, die zwei Photoinitiatoren und ein Gemisch von radikalisch und kationisch polymerisierbaren Komponenten umfasst. Zunächst wird die Masse mit Strahlung einer Wellenlänge bestrahlt, die zur Aktivierung des radikalischen Photoinitiators geeignet ist, um die Masse initial zu verfestigen. Anschließend wird die verfestigte Masse mit aktinischer Strahlung einer Wellenlänge bestrahlt, die zur Aktivierung des kationischen Photoinitiators geeignet ist, um in definierten Bereichen eine Strukturierung zu erzeugen. In einem anschließenden Waschprozess wird die außerhalb dieser Bereiche vorhandene Masse entfernt, die im ersten Schritt ausschließlich radikalisch teilgehärtet wurde. Die Photoinitiatoren werden so gewählt, dass deren Absorptionsbereiche keinen Überlapp besitzen und durch verschiedene Wellenlängen gezielt getrennt aktiviert werden können.

Die US 5 707 780 beschreibt ebenfalls Massen, die Gemische von radikalisch und kationisch polymerisierbaren Komponenten umfassen, welche durch Bestrahlung mit einem Argonlaser bei unterschiedlichen Wellenlängen gleichzeitig aktiviert werden können. Die Massen zeichnen sich durch eine hohe initiale Festigkeit nach Aushärtung aus, die durch die Einstellung des Verhältnisses der Exktinktionskoeffizienten der radikalischen und kationischen Photoinitiatoren zueinander erzielt werden kann. Die beschriebenen Massen lassen sich in der additiven Fertigung verwenden. Eine sequentielle Belichtung wird nicht offenbart.

Aus der US 5 252 694 sind Massen bekannt, die neben radikalisch und kationisch polymerisierbaren Monomeren mindestens ein Katalysatorsystem enthalten, welches ein Organometallsalz und einen thermisch zersetzbaren Ester umfasst. Wahlweise enthalten die Massen zusätzlich einen Photoinitiator für die radikalische Polymerisation und Peroxide als Beschleuniger. Zum Einsatz kommen die Massen bevorzugt für Beschichtungsanwendungen. Eine sequentielle Belichtung der Massen ist nicht vorgesehen.

Die US 6 866 899 beschreibt die Herstellung haftklebriger Massen, die ausschließlich radikalisch härtbare Bestandteile enthalten. Die Massen werden bei verschiedenen Wellenlängen sequentiell bestrahlt. Der erste Bestrahlungsschritt wird dabei so gestaltet, dass eine Wellenlänge verwendet wird, die stets größer als die Wellenlänge ist, die im zweiten Bestrahlungsschritt verwendet wird. Der in den Massen enthaltene Photoinitiator ist so gewählt, dass er jeweils bei den unterschiedlichen Wellenlängen absorbiert. Die verwendeten Bestrahlungsquellen sollen einen möglichst geringen spektralen Überlapp aufweisen.

Die US 7 964 248 offenbart ein Photoinitiatorsystem für die kationische Polymerisation, welches mindestens zwei Photoinitiatoren umfasst, wobei einer der Photoinitiatoren ein Sulfoniumsalz mit einem Fluorophosphatanion ist. Durch die Kombination zweier voneinander verschiedener Photoinitiatoren werden die Lagerstabilität der Massen und gleichzeitig die mechanischen Eigenschaften der ausgehärteten Masse verbessert. Eine sequentielle Bestrahlung der Masse bei unterschiedlichen Wellenlängen ist nicht offenbart. Ferner erlaubt die Verwendung von Photoinitiatoren auf Basis von Fluorophosphatanionen keinen ausreichend schnellen Festigkeitsaufbau.

### ZUSAMMENFASSUNG DER ERFINDUNG

Der Erfindung liegt die Aufgabe zugrunde, die oben beschriebenen Nachteile der aus dem Stand der Technik bekannten Verfahren und Zusammensetzungen zu vermeiden und kationisch härtbare Massen bereitzustellen, die in industriellen Füge- und Vergussverfahren vielfältig einsetzbar sind.

Insbesondere sollen die kationisch härtbaren Massen es ermöglichen, ein Verfahren bereitzustellen, mit dem der Festigkeitsaufbau der Massen gezielt gesteuert werden kann.

Erfindungsgemäß wird diese Aufgabe durch eine kationisch härtbare Masse nach Anspruch 1 und ein Verfahren nach Anspruch 7 gelöst.

Weitere Ausführungsformen der Erfindung sind in den Unteransprüchen angegeben, die wahlweise miteinander kombiniert werden können.

Die kationisch härtbare Masse gemäß der Erfindung umfasst:
a) mindestens eine kationisch polymerisierbare Komponente;
b) einen ersten Photoinitiator, der bei Bestrahlung mit aktinischer Strahlung einer ersten Wellenlänge λ₁ eine Säure freisetzt; und
c) einen zweiten Photoinitiator, der bei Bestrahlung mit aktinischer Strahlung einer zweiten Wellenlänge λ₂ eine Säure freisetzt, wobei der zweite Photoinitiator ein Arylsulfoniumsalz umfasst;
wobei die zweite Wellenlänge λ₂ kürzer als die erste Wellenlänge λ₁, ist, wobei der erste und der zweite Photoinitiator so ausgewählt sind, dass der erste Photoinitiator bei einer ersten Wellenlänge λ₁ von 460 nm aktivierbar ist, ohne dass gleichzeitig der zweite Photoinitiator aktiviert wird, und wobei eine Absorptionsbande des zweiten Photoinitiators bei einer Wellenlänge λ₂ von 365 nm nach der Aktivierung des ersten Photoinitiators oberhalb der Absorption des ersten Photoinitiators und der nach der Aktivierung gebildeten Zerfallsprodukte liegt, so dass der zweite Photoinitiator nach Bestrahlen der Masse mit aktinischer Strahlung der ersten Wellenlange λ₁, in der Masse eine Absorption von aktinischer Strahlung der zweiten Wellenlänge λ₂ aufweist, die ausreichend ist, um den zweiten Photoinitiator zu aktivieren und die Masse zu fixieren, wobei in der Masse eine Hautbildung stattfindet.

Die kationisch härtbare Masse umfasst somit kationisch polymerisierbare Komponenten (A), einen ersten Photoinitiator (B1) und einen zweiten Photoinitiator (B2) für die kationische Polymerisation, der vom ersten Photoinitiator (B1) verschieden ist. Daneben kann die Masse weitere Zusatzstoffe (C), radikalisch polymerisierbare Bestandteile (D) und wahlweise einen weiteren Photoinitiator (E) für die radikalische Polymerisation enthalten.

Erfindungsgemäß wird die kationisch härtbare Masse in einem Verfahren zum Fügen, Vergießen oder Beschichten von Substraten eingesetzt, wobei das Verfahren die folgenden Schritte umfasst:
a) Bereitstellen der oben beschriebenen kationisch härtbaren Masse;
b) Dosieren der Masse auf ein erstes Substrat;
c) Aktivieren der Masse durch Bestrahlen mit aktinischer Strahlung der ersten Wellenlänge λ₁;
d) wahlweise Zuführen eines zweiten Substrates zur aktivierten Masse auf dem ersten Substrat unter Bildung eines Substratverbundes, und weiter wahlweise Ausrichten beider Substrate zueinander;
e) Fixieren der aktivierten Masse durch Bestrahlen mit aktinischer Strahlung der zweiten Wellenlänge λ₂; und
f) wahlweise Erwärmen der fixierten Masse auf dem ersten Substrat oder in dem Substratverbund.

Das erfindungsgemäße Verfahren ist dadurch gekennzeichnet, dass die katonisch härtbare Masse mindestens eine kationisch polymerisierbare Komponente und einen ersten Photoinitiator umfasst, der bei Bestrahlung mit aktinischer Strahlung einer ersten Wellenlänge λ₁, nm eine Säure freisetzt; sowie einem zweiten Photoinitiator, der bei Bestrahlung mit aktinischer Strahlung einer zweiten Wellenlänge λ₂ eine Säure freisetzt, wobei die zweite Wellenlänge λ₂ kürzer als die erste Wellenlänge λ₁, ist, wobei der erste und der zweite Photoinitiator so ausgewählt werden, dass der erste Photoinitiator bei einer ersten Wellenlänge λ₁ von 460 nm aktivierbar ist, ohne dass gleichzeitig der zweite Photoinitiator aktiviert wird, und wobei eine Absorptionsbande des zweiten Photoinitiators bei einer Wellenlänge λ₂ von 365 nm nach der Aktivierung des ersten Photoinitiators oberhalb der Absorption des ersten Photoinitiators und der nach der Aktivierung gebildeten Zerfallsprodukte liegt, so dass der zweite Photoinitiator nach Aktivieren der Masse in Schritt c) in der Masse eine Absorption von aktinischer Strahlung der zweiten Wellenlänge λ₂ aufweist, die für eine Aktivierung des zweiten Photoinitiators in Schritt e) ausreichend ist, wobei in der Masse eine Hautbildung stattfindet.

Im erfindungsgemäßen Verfahren lässt sich durch den ersten Bestrahlungsschritt die kationische Polymerisation der Masse initiieren. Die Masse bleibt nach der Aktivierung des ersten Photoinitiators durch Bestrahlung mit aktinischer Strahlung der ersten Wellenlänge λ₁ aber noch für eine ausreichend lange Zeit verarbeitbar. Insbesondere lassen sich die zu fügenden Substrate innerhalb dieses Zeitraums exakt zueinander ausrichten. Dies ist besonders für Fügeverfahren zur Fertigung von elektro-optischen Bauteilen wie Kameramodulen von Bedeutung. Durch den zweiten Bestrahlungsschritt wird die aktivierte Masse in einen formstabilen Zustand überführt.

Das erfindungsgemäße Verfahren ermöglicht es ferner, ohne zusätzlichen Wärmeeintrag eine sichere Aushärtung der aktivierten Masse bei Raumtemperatur zu erreichen Dies schließt allerdings nicht aus, dass die Aushärtung durch Erwärmen der fixierten Masse beschleunigt werden kann.

Im Sinne des erfindungsgemäßen Verfahrens bezeichnet "Fixierung" den Aufbau einer Festigkeit, ab der kein Verfließen der Masse mehr stattfinden kann, oder das Maß an Festigkeit, ab dem gefügte Teile in Folgeprozessen gehandhabt werden können, ohne dass es zu einer Zerstörung des Klebeverbundes kommt.

Gegenstand der Erfindung ist ferner die Verwendung der erfindungsgemäßen kationisch härtbaren Masse in einem Verfahren zum Fügen, Vergießen, Abformen, Abdichten und Beschichten von Substraten, bei dem die Masse durch Bestrahlung mit aktinischer Strahlung einer ersten Wellenlänge λ₁ in einem Bereich von 400 bis 600 nm aktivierbar und durch anschließende Bestrahlung mit aktinischer Strahlung einer zweiten Wellenlänge λ₂ in einem Bereich von 200 bis 400 nm fixierbar ist, wobei die zweite Wellenlänge λ₂ kürzer als die erste Wellenlänge λ₁, ist.

### BESCHREIBUNG DER ZEICHNUNGEN

In den beigefügten Zeichnungen zeigen
- Figur 1 ein Emissionsspektrum einer LED-Bestrahlungslampe DELOLUX 20 / 365;
- Figur 2 UV/VIS-Spektren eines Photoinitiatorgemischs nach Beispiel 1, vor und nach Aktivierung des ersten Photoinitiators durch Bestrahlen des Gemischs bei einer ersten Wellenlänge λ₁; und
- Figur 3 UV/VIS-Spektren eines Photoinitiatorgemischs nach Beispiel 7, vor und nach Aktivierung des ersten Photoinitiators durch Bestrahlen des Gemischs bei einer ersten Wellenlänge λ₁.

### AUSFÜHRLICHE BESCHREIBUNG BEVORZUGTER AUSFÜHRUNGSFORMEN

Die Erfindung wird im Folgenden anhand von bevorzugten Ausführungsformen ausführlich und beispielhaft beschrieben, die jedoch nicht in einem einschränkenden Sinn verstanden werden sollen.

"Einkomponentig" oder "Einkomponentenmasse" bedeutet im Sinne der Erfindung, dass die genannten Komponenten der Masse zusammen in einer Packungseinheit vorliegen.

"Flüssig" bedeutet im Sinne der Erfindung, dass bei 23 °C der durch Viskositätsmessung bestimmte Verlustmodul G" größer als der Speichermodul G' der betreffenden Masse ist.

Soweit der unbestimmte Artikel "ein" oder "eine" verwendet wird, ist damit auch die Pluralform "ein oder mehrere" umfasst, soweit diese nicht ausdrücklich ausgeschlossen wird.

"Mindestens difunktionell" bedeutet, dass pro Molekül zwei oder mehr Einheiten der jeweils genannten funktionellen Gruppe enthalten sind.

Alle im Folgenden aufgeführten Gewichtsanteile beziehen sich, wenn nicht anders angegeben, jeweils auf das Gesamtgewicht der Masse.

Angaben von Äquivalenten beziehen sich im Folgenden jeweils auf 1 Äquivalent der funktionellen Gruppe und sind im Verhältnis zueinander angegeben.

In einer ersten bevorzugten Ausführungsform enthalten die Massen zur Durchführung des erfindungsgemäßen Verfahrens kationisch polymerisierbare Komponenten (A), mindestens zwei Photoinitiatoren (B) für die kationische Polymerisation, die voneinander verschieden sind, und wahlweise weitere Zusatzstoffe (C). Bevorzugt bestehen die Massen der ersten Ausführungsform aus den genannten Komponenten (A), (B) und (C).

In einer zweiten bevorzugten Ausführungsform enthalten die Massen zur Durchführung des erfindungsgemäßen Verfahrens neben den oben genannten Komponenten (A), (B) und (C) zusätzlich radikalisch polymerisierbare Bestandteile (D) und wahlweise einen weiteren Photoinitiator (E) für die radikalische Polymerisation. Bevorzugt bestehen die Massen der zweiten Ausführungsform aus den Komponenten (A) bis (E).

Im Folgenden werden die Komponenten der kationisch polymerisierbaren Masse zur Verwendung im erfindungsgemäßen Verfahren näher beschrieben.

### Komponente (A): Kationisch polymerisierbare Komponenten

Die kationisch polymerisierbaren Komponenten sind in Bezug auf ihre chemische Basis nicht weiter eingeschränkt. Bevorzugt sind die kationisch polymerisierbaren Komponenten aus der aus epoxidhaltigen Verbindungen (A1), oxetanhaltigen Verbindungen (A2), Vinylethern (A3) sowie Kombinationen davon bestehenden Gruppe ausgewählt. Wahlweise kann die kationisch polymerisierbare Komponente zusätzlich einen oder mehrere Alkohole (A4) als reaktive Flexibilisierungsmittel enthalten. In einer bevorzugten Ausführungsform enthält die Masse mindestens eine epoxidhaltige Verbindung (A1).

Die epoxidhaltige Verbindung (A1) in den erfindungsgemäßen Massen umfasst bevorzugt eine oder mehrere mindestens difunktionelle epoxidhaltige Verbindungen. Mindestens "difunktionell" bedeutet, dass die epoxidhaltige Verbindung mindestens zwei Epoxidgruppen enthält. Die Komponente (A1) kann beispielsweise cycloaliphatische Epoxide, aromatische und aliphatische Glycidylether, Glycidylester oder Glycidylamine und Mischungen davon umfassen.

Difunktionelle cycloaliphatische Epoxidharze sind im Stand der Technik bekannt und beinhalten Verbindungen, die sowohl eine cycloaliphatische Gruppe als auch mindestens zwei Oxiranringe tragen. Beispielhafte Vertreter sind 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-6-methylcyclohexancarboxylat, Vinylcyclohexendioxid, Bis(3,4-Epoxycyclohexylmethyl)adipat, Dicyclopentadiendioxid und 1,2-Epoxy-6-(2,3-epoxypropoxy)hexahydro-4,7-methanindan, sowie Mischungen davon.

Aromatische Epoxidharze können in den erfindungsgemäßen Massen ebenso verwendet werden. Beispiele für aromatische Epoxidharze sind Bisphenol-A-Epoxidharze, Bisphenol-F-Epoxidharze, Phenol-Novolak-Epoxidharze, Cresol-Novolak-Epoxidharze, Biphenylepoxidharze, 4,4'-Biphenylepoxidharze, Divinylbenzoldioxid, 2-Glycidylphenylglycidylether, Naphthalindioldiglycidylether, Glycidylether von Tris(hydroxyphenyl)-methan und Glycidylether von Tris(hydroxyphenyl)-ethan, sowie Mischungen davon. Ferner können auch alle vollständig oder teilweise hydrierten Analoga aromatischer Epoxidharze eingesetzt werden.

Auch mit epoxidhaltigen Gruppen substituierte Isocyanurate und andere heterocyclische Verbindungen können in den erfindungsgemäßen Massen verwendet werden. Beispielhaft seien Triglycidylisocyanurat und Monoallyldiglycidylisocyanurat genannt.

Außerdem können auch polyfunktionelle Epoxidharze aller genannten Harzgruppen, zäh elastifizierte Epoxidharze sowie Gemische verschiedener Epoxidharze in den erfindungsgemäßen Massen eingesetzt werden.

Ebenfalls im Sinne der Erfindung ist eine Kombination mehrerer epoxidhaltiger Verbindungen, von denen mindestens eine di- oder höherfunktionell ist.

Zusätzlich zu den mindestens difunktionellen epoxidhaltigen Verbindungen können auch monofunktionelle Epoxide als reaktive Verdünner verwendet werden.

Beispiele für kommerziell erhältliche epoxidhaltige Verbindungen sind Produkte, die unter den Handelsnamen CELLOXIDE^{™} 2021P, CELLOXIDE^{™} 8000 von Daicel Corporation, Japan, als EPIKOTE^{™} RESIN 828 LVEL, EPIKOTE^{™} RESIN 166, EPIKOTE^{™} RESIN 169 von Momentive Specialty Chemicals B.V., Niederlande, als Epilox^{™}-Harze der Produktreihen A, T und AF von Leuna Harze, Deutschland, oder als EPICLON^{™} 840, 840-S, 850, 850-S, EXA850CRP, 850-LC von DIC K.K., Japan, Omnilane 1005 und Omnilane 2005 von IGM Resins B.V., Syna Epoxy 21 und Syna Epoxy 06 von Synasia Inc., TTA21, TTA26, TTA60 und TTA128 von Jiangsu Tetra New Material Technology Co. Ltd., verfügbar sind.

Anstelle oder zusätzlich zur epoxidhaltigen Verbindung (A1) können auch oxetanhaltige Verbindungen (A2) in den Massen als kationisch härtbare Komponenten (A) eingesetzt werden. Verfahren zur Herstellung von Oxetanen sind insbesondere aus der US 2017/0198093 A1 bekannt.

Beispiele für kommerziell erhältliche Oxetane sind Bis(1-ethyl-3-oxetanyl-methyl)ether (DOX), 3-Allyloxymethyl-3-ethyloxetane (AQX), 3-Ethyl-3-[(phenoxy)-methyloxetane (POX), 3-Ethyl-3-hydroxymethyl-oxetane (OXA), 1,4-Bis[(3-ethyl-3-oxetanylmethoxy)methyl]benzol (XDO), 3-Ethyl-3-[(2-ethylhexyloxy)methyl]oxetan (EHOX). Die genannten Oxetane sind von der Firma TOAGOSEI CO., LTD. kommerziell verfügbar.

Anstelle oder zusätzlich zu den Komponenten (A1) und (A2) können auch Vinylether (A3) als kationisch härtbare Komponenten in den Massen eingesetzt werden. Geeignete Vinylether sind Trimethylolpropan-Trivinylether, Ethylenglykol-Divinylether und cyclische Vinylether sowie deren Mischungen. Ferner können Vinylether polyfunktioneller Alkohole eingesetzt werden.

Schließlich kann die kationisch polymerisierbare Komponente wahlweise auch einen oder mehrere Alkohole (A4) umfassen, die als reaktive Flexibilisierungsmittel eingesetzt werden. Insbesondere höhermolekulare Polyole können zur Flexibilisierung kationischer Massen verwendet werden. Geeignete Polyole sind beispielsweise auf Basis von Polyethern, Polyestern, Polycaprolactonen, Polycarbonaten oder (hydrierten) Polybutadiendiolen verfügbar.

Beispiele für kommerziell erhältliche höhermolekulare Polyole sind Produkte, die unter den Handelsnamen ETERNACOLL UM-90 (1/1), Eternacoll UHC50-200 der Firma UBE Industries Ltd., als Capa^{™} 2200, Capa^{™} 3091 der Firma Perstorp, als Liquiflex H von Petroflex, als Merginol 901 der Firma HOBUM Oleochemicals, als Placcel 305, Placcel CD 205 PL der Firma Daicel Corporation, als Priplast 3172, Priplast 3196 der Firma Croda, als Kuraray Polyol F-3010, Kuraray Polyol P-6010 von Kuraray Co., Ltd., als Krasol LBH-2000, Krasol HLBH-P3000 von Cray Valley oder als Hoopol S-1015-35 oder Hoopol S-1063-35 der Firma Synthesia Internacional SLU verfügbar sind.

Die Aufzählung der kationisch polymerisierbaren Komponenten (A) ist als beispielhaft und nicht abschließend zu sehen. Eine Mischung der genannten kationisch polymerisierbaren Komponenten (A1) bis (A4) ist ebenfalls im Sinne der Erfindung.

Die kationisch polymerisierbare Komponente (A) liegt in der erfindungsgemäßen Masse, bezogen auf das Gesamtgewicht der Masse, bevorzugt in einem Anteil von 5 bis 99 Gew.-% vor, besonders bevorzugt in einem Anteil von 10 bis 95 Gew.-%.

Gemäß einer bevorzugten Ausführungsform besteht die kationisch polymerisierbare Komponente (A) aus der epoxidhaltigen Komponente (A1) und wahlweise mindestens einem Alkohol (A4) als reaktivem Flexibilisierungsmittel.

In einer weiteren Ausführungsform kann die epoxidhaltige Verbindung ganz oder teilweise durch eine oxetanhaltige Verbindung ersetzt sein.

Ferner kann die kationisch polymerisierbare Komponente, zusätzlich zur epoxidhaltigen Komponente (A1) und/oder der oxetanhaltigen Verbindung (A2), einen oder mehrere Vinylether enthalten. In diesem Fall liegt der Vinylether in einem Anteil von 0 bis 20 Gew. -% vor, bevorzugt in einem Anteil von 0 bis 15 Gew.-%, jeweils bezogen auf das Gesamtgewicht der Masse.

Die Komponente (A4) liegt in den Massen zur Verwendung im erfindungsgemäßen Verfahren in einem Anteil von 0 bis 80 Gew. -% vor, bevorzugt in einem Anteil von 0 bis 60 Gew. -%, besonders bevorzugt 1 bis 50 Gew. -%, jeweils bezogen auf das Gesamtgewicht der Masse.

### Komponente (B): Photoinitiatoren für die kationische Polymerisation

Neben der Komponente (A) enthalten die Massen zur Verwendung im erfindungsgemäßen Verfahren mindestens zwei Photoinitiatoren (B1) und (B2) für die kationische Polymerisation, die aus der Gruppe der photolatenten Säurebildner ausgewählt sind. Dies bedeutet, dass die Photoinitiatoren (B1) und (B2) bei Bestrahlung mit aktinischer Strahlung einer vorbestimmten Wellenlänge aktiviert werden und eine Säure freisetzen. Die Säure kann eine Lewis-Säure oder eine Brönstedt-Säure sein. Die Photoinitiatoren (B1) und (B2) unterscheiden sich voneinander und sind durch Bestrahlung bei unterschiedlichen Wellenlängen aktivierbar.

Zur Bestrahlung der Photoinitiatoren (B1) und (B2) kann monochromatisches Laserlicht verwendet werden. Bevorzugt werden jedoch Strahlungsquellen eingesetzt, die ein singuläres Emissionsmaximum bei der vorbestimmten Wellenlänge aufweisen. Die Strahlungsquelle ist vorzugweise eine LED-Aushärtungslampe, die im Handel verfügbar sind.

### Komponente (B1): Photoinitiator auf Metalloceniumbasis

Die erfindungsgemäßen Massen enthalten bevorzugt mindestens einen photolatenten Säurebildner auf Basis einer Metalloceniumverbindung als Photoinitiator (B1) für die kationische Polymerisation. Eine Übersicht über verschiedene Metalloceniumsalze wird in der EP 0 542 716 B1 offenbart. Als unterschiedliche Anionen der Metalloceniumsalze seien beispielhaft HSO₄⁻, PF₆⁻, SbF₆⁻, AsF₆-, Cl⁻, Br, I⁻, CIO₄⁻, PO₄⁻, SO₃CF₃⁻, Tosylat, Aluminate oder ein Borat-Anion, wie etwa BF₄⁻ und B(C₆F₅)₄⁻, angeführt.

Bevorzugt ist der Photoinitiator auf Basis einer Metalloceniumverbindung aus der Gruppe der Ferroceniumsalze ausgewählt.

Beispiele für geeignete Ferroceniumsalze sind Cumenylcyclopentadienyleisen (II) Hexafluorophosphat (Irgacure 261); Naphthalenylcyclopentadienyleisen(II) Hexafluorophosphat, Benzylcyclopentadienyleisen (II) Hexafluorophosphat und Cyclopentadienylcarbazoleisen (II) hexafluorophosphat.

Bevorzugt absorbiert der Photoinitiator (B1) im sichtbaren Bereich des elektromagnetischen Spektrums. Dies bedeutet, dass der Photoinitiator (B1) bevorzugt bei einer ersten Wellenlänge λ₁ ≥ 380 nm aktivierbar ist. Vorzugsweise lässt sich der Photoinitiator (B1) durch Strahlung einer Wellenlänge von ≥ 400 nm, bevorzugt ≥ 460 nm aktivieren. Besonders bevorzugt liegt die Aktivierungswellenlänge λ₁, in einem Bereich von 400 bis 750 nm.

Der Photoinitiator (B1) ist bezogen auf das Gesamtgewicht der Masse in einem Anteil von 0,01 bis 5 Gew.-% enthalten, bevorzugt jedoch in Anteilen von 0,3 bis 3 Gew.-%.

### (B2): Photoinitiator auf Basis von Oniumverbindungen

Die Massen zur Durchführung des erfindungsgemäßen Verfahrens enthalten neben dem photolatenten Säurebildner auf Metalloceniumbasis (B1) mindestens einen zweiten photolatenten Säurebildner auf Basis einer Oniumverbindung als Photoinitiator (B2) für die kationische Polymerisation. Bevorzugt sind Oniumverbindungen aus der Gruppe der Arylsulfoniumsalze und der Aryliodoniumsalze, und Kombinationen davon.

Als photolatente Säuren (B2) geeignete aromatische Arylsulfoniumsalze sind unter anderem in der WO 2003/072567 oder WO 2003/008404 beschrieben. Geeignete Aryliodoniumsalze sind in der WO 1998/002493 oder US 6 306 555 offenbart.

Darüber hinaus werden als photolatente Säuren (B2) geeignete Oniumsalze von J.V. Crivello und K. Dietliker in "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998, beschrieben.

Als Anionen der Sulfonium- oder lodoniumsalze können beispielsweise HSO₄, PF₆⁻, SbF₆⁻, AsF₆-, Cl⁻, Br, I⁻, ClO₄-, PO₄⁻, SO₃CF₃⁻, Tosylat, Aluminate oder ein Borat-Anion, wie etwa BF₄⁻ und B(C₆F₅)₄-, dienen. Für höhere Polymerisationsraten sind komplexe Anionen mit geringer Nucleophilie bevorzugt. Besonders Bevorzugt kommen als Photoinitiator (B2) Arylsulfonium- und Aryliodoniumsalze zum Einsatz, insbesondere mit Hexafluoroantimonat als Gegenion.

Ebenfalls geeignet sind photolatente Säuren auf Basis von Oniumsalzen mit Aluminatanionen, wie sie in der der EP 3 184 569 A1 oder der WO 2017 035 551 A1 offenbart werden.

Kommerziell als photolatente Säuren verfügbare Photoinitiatoren auf Triarylsulfoniumbasis sind unter den Markennamen Chivacure 1176, Chivacure 1190 von der Firma Chitech, Irgacure 290, Irgacure 270, Irgacure GSID 26-1 von der Firma BASF, Speedcure 976 und Speedcure 992 von Lambson, TTA UV-692, TTA UV-694 von der Firma Jiangsu Tetra New Material Technology Co., Ltd. oder UVI-6976 und UVI-6974 von der Firma Dow Chemical Co. erhältlich.

Kommerziell als photolatente Säuren verfügbare Photoinitiatoren auf Diaryliodoniumbasis sind u.a. unter den Markennamen UV1242 oder UV2257 von der Firma Deuteron und Bluesil 2074 von der Firma Bluestar erhältlich.

Der in den erfindungsgemäßen Massen eingesetzte Photoinitiator (B2) ist vorzugsweise durch Bestrahlen mit aktinischer Strahlung einer Wellenlänge λ₂ von 200 bis 400 nm aktivierbar, besonders bevorzugt bei einer Wellenlänge λ₂ von 250 bis 365 nm. Bei Bedarf kann der Photoinitiator (B2) mit einem geeigneten Sensibilisierungsmittel kombiniert werden.

Die voranstehenden Aufzählungen sind als beispielhaft für den Photoinitiator (B2) zu sehen und keineswegs als limitierend zu verstehen.

Der Photoinitiator (B2) ist bezogen auf das Gesamtgewicht der Masse in einem Anteil von 0,01 bis 5 Gew.-% enthalten, bevorzugt jedoch in Anteilen von 0,3 bis 3 Gew.-%.

Der Anteil beider Photoinitiatoren (B1) und (B2) beträgt, bezogen auf das Gesamtgewicht der Masse, von 0,02 bis 10 Gew.-%, bevorzugt von 0,6 bis 6 Gew.%.

Die Differenz zwischen der zur Bestrahlung und Aktivierung des ersten Photoinitiators (B1) eingesetzten Wellenlänge λ₁ und der zur Bestrahlung und Aktivierung des zweiten Photoinitiators (B2) eingesetzten Wellenlänge λ₂ beträgt vorzugsweise mindestens 20 nm, bevorzugt mindestens 50 nm. Entsprechendes gilt für die Emissionsmaxima der zur Bestrahlung verwendeten Strahlungsquellen. Die Differenz der Wellenlängen λ₁, und λ₂ wird vorzugsweise so gewählt, dass zwischen den Emissionsspektren der Strahlungsquellen kein Überlapp besteht.

### Komponente (C): Zusatzstoffe

Die beschriebenen Massen können darüber hinaus noch fakultative Bestandteile als Zusatzstoffe (C) enthalten. Die Zusatzstoffe (C) sind vorzugsweise aus der Gruppe der Füllstoffe, Farbstoffe, Pigmente, Alterungsschutzmittel, Fluoreszenzmittel, Stabilisatoren, Beschleuniger, Haftvermittler, Trockenmittel, Vernetzer, Fließverbesserer, Benetzungsmittel, Thixotropierungsmittel, Verdünnungsmittel, nicht-reaktiven Flexibilisierer, nicht-reaktiven polymeren Verdickungsmittel, Flammschutzmittel, Korrosionsinhibitoren, Weichmacher und Tackyfier ausgewählt.

Einige der als Komponente (C) einsetzbaren Zusatzstoffe sind nachfolgend näher beschrieben.

### Sensibilisierungsmittel (C1):

Die Massen zur Durchführung des erfindungsgemäßen Verfahrens können wahlweise geeignete Sensibilisierungsmittel enthalten. Das Sensibilisierungsmittel (C1) kann insbesondere dazu verwendet werden, um die Aktivierung des Photoinitiators (B2) bei der Wellenlänge λ₂ zu ermöglichen. Die Auswahl des Sensibilisierungsmittels (C1) muss dabei so erfolgen, dass bei der Bestrahlung mit der Wellenlänge λ₁ nicht bereits der Photoinitiator (B2) aktiviert wird.

Beispiele für geeignete Sensibilisierungsmittel (C1) sind Anthracen, Perylen, Phenothiazin, Xanthon, Thioxanthon, Benzophenon, Ethyl-4-dimethylaminobenzoat oder sterisch gehinderte Amine.

Insbesondere können Thioxanthonderivate eingesetzt werden wie beispielsweise 2,4-Diethylthioxanthon (DETX), 1-Chlor-4-propoxythioxanthon (CPTX) und Isopropyl Thioxanthon (ITX), die kommerziell von der Firma Lambson erhältlich sind. Anthracenderivate wie 2-Ethyl-9,10-dimethoxyanthracen (EDMA), 9-hydroxy-methyl-anthracen (HMA), 9,10-Dibutoxyanthracen, erhältlich von der Firma Sigma-Aldrich, können ebenso verwendet werden.

Die voranstehende Aufzählung ist als beispielhaft und nicht abschließend zu verstehen.

Das Sensibilisierungsmittel (C1) ist in der Masse bevorzugt in einem Anteil von 0 bis 5 Gew.-% enthalten, weiter bevorzugt in Anteilen von 0 bis 3 Gew.-%, und besonders bevorzugt von 0 bis 1 Gew. -%, jeweils bezogen auf das Gesamtgewicht der Masse.

### Beschleuniger (C2):

Als Beschleuniger für die Aushärtung der Masse durch kationische Polymerisation können insbesondere Peroxyverbindungen vom Typ der Perester, der Diacylperoxide, der Peroxydicarbonate und/oder der Hydroperoxide eingesetzt werden. Bevorzugt werden Hydroperoxide verwendet. Als besonders bevorzugter Beschleuniger kommt Cumolhydroperoxid in etwa 70 - 90-%iger Lösung in Cumol zum Einsatz.

Durch den Einsatz von Peroxiden wird die Hautbildung der Massen nach Bestrahlung und Aktivierung des ersten Photoinitiators (B1) mit der ersten Wellenlänge λ₁, beschleunigt. Der Anteil an Peroxiden wird so gewählt, dass im erfindungsgemäßen Verfahren eine ausreichende Offenzeit für das Fügen und wahlweise Ausrichten eines zweiten Substrates verbleibt. Die Dauer der benötigten Offenzeit ist abhängig von dem jeweils durchgeführten Verarbeitungsprozess.

Das Peroxid (C2) ist, bezogen auf Gesamtgewicht der Masse, bevorzugt in einem Anteil von 0 bis 5 Gew.-% enthalten.

Das Massenverhältnis zwischen dem ersten Photoinitiator (B1), beispielsweise Ferroceniumhexafluoroantimonat und dem Peroxid (C2), beispielsweise Cumolhydroperoxid, kann in weiten Grenzen variiert werden. Vorzugsweise wird jedoch ein Verhältnis von 1 : 0,1 bis 1 : 6, und besonders bevorzugt von 1 : 2 bis 1 : 4, verwendet.

### Komponente (D): Radikalisch polymerisierbare Verbindungen

Wahlweise enthalten die Massen zur Verwendung im erfindungsgemäßen Verfahren neben den Komponenten (A) bis (C) weitere radikalisch polymerisierbare Verbindungen. Die radikalisch polymerisierbaren Verbindungen sind bevorzugt strahlungshärtbare Verbindungen. Besonders bevorzugt kommen strahlungshärtbare Verbindungen auf der Basis von (Meth)Acrylaten zum Einsatz. Diese sind in ihrer chemischen Struktur nicht weiter eingeschränkt. Beispielsweise können sowohl aliphatische als auch aromatische (Meth)Acrylate verwendet werden. Als (Meth)Acrylate werden hier und im Folgenden sowohl die Derivate der Acrylsäure als auch der Methacrylsäure sowie Kombinationen und Mischungen davon bezeichnet.

Die radikalisch polymerisierbare Verbindungen (D) können dazu eingesetzt werden, um die durch eine Bestrahlung der Massen mit der zweiten Wellenlänge λ₂ erzielte Lichtfixierfestigkeit zu erhöhen.

Bevorzugt ist die strahlungshärtbare Verbindung mindestens difunktionell. Geeignet sind beispielsweise die folgenden strahlungshärtbaren Verbindungen: Isobornylacrylat, Stearylacrylat, Tetrahydrofurfurylacrylat, Cyclohexylacrylat, 3,3,5-Trimethylcyclohexanolacrylat, Behenylacrylat, 2-Methoxyethylacrylat und andere ein- oder mehrfach alkoxylierte Alkylacrylate, Isobutylacrylat, Isooctylacrylat, Laurylacrylat, Tridecylacrylat, Isostearylacrylat, 2-(o-Phenylphenoxy)ethylacrylat, Acryloylmorpholin, N, N-Dimethylacrylamid, 4-Butandioldiacrylat, 1,6-Hexandioldiacrylat, 1,10-Decandioldiacrylat, Tricyclodecandimethanoldiacrylat, Dipropylenglycoldiacrylat, Tripropylenglycoldiacrylat, Polybutadiendiacrylat, Cyclohexandimethanoldiacrylat, Diurethanacrylate von monomeren, oligomeren oder polymeren Diolen und Polyolen, Trimethylolpropantriacrylat (TMPTA), und Dipentaerythritolhexaacrylat (DPHA), und Kombinationen davon. Auch von mehrfach verzweigten oder dendrimeren Alkoholen abgeleitete höherfunktionelle Acrylate können vorteilhaft verwendet werden

Die analogen Methacrylate sind ebenfalls im Sinne der Erfindung.

Weiterhin eignen sich auch strahlungshärtbare Verbindungen mit Allylgruppen, wie beispielsweise 1,3,5-Triazin-2,4,6(1H,3H,5H)-trion, das kommerziell als TAICROS^{®} erhältlich ist. Auch unhydrierte Polybutadiene mit freien Doppelbindungen wie beispielsweise die Poly BD^{®}-Typen können als strahlungshärtende Verbindung (C) eingesetzt werden.

Als höhermolekulare strahlungshärtbare Verbindung können Urethanacrylate auf Basis von Polyestern, Polyethern, Polycarbonatdiolen und/oder (hydrierten) Polybutadiendiolen als Komponente (C) zum Einsatz kommen.

Bevorzugt kommen strahlungshärtbare Verbindungen zum Einsatz, die sowohl über radikalisch polymerisierbare Gruppen als auch kationisch härtbare Epoxidgruppen verfügen.

Beispiele für kommerziell erhältliche Produkte, die sowohl über radikalisch polymerisierbare Gruppen als auch kationisch härtbare Epoxidgruppen verfügen umfassen, 3,4-Epoxycyclohexyl-methyl-methacrylat (TTA15) von der Firma Jiangsu Tetra New Material Technology Co., Ltd., UVACURE 1561 von der Firma UCB , Solmer SE 1605 von der Firma Melrob Ltd. und Miramer PE210HA von der Firma Miwon Europe GmbH.

Eine Kombination mehrerer strahlungshärtbarer Verbindungen ist ebenfalls im Sinne der Erfindung.

Die radikalisch polymerisierbare Verbindung liegt in der erfindungsgemäßen Masse bevorzugt in einem Anteil von bis zu 50 Gew.-% vor, besonders bevorzugt in einem Anteil von 5 bis 50 Gew.-%, jeweils bezogen auf das Gesamtgewicht der Masse.

### Komponente (E): Photoinitiator für die radikalische Polymerisation

Neben den Komponenten (A) bis (D) enthalten die Massen zur Verwendung im erfindungsgemäßen Verfahren wahlweise noch einen Photoinitiator (E) zur Aktivierung der radikalischen Polymerisation. Als Photoinitiatoren können die üblichen, im Handel erhältlichen Verbindungen eingesetzt werden, wie beispielsweise α-Hydroxyketone, Benzophenon, α,α'-Diethoxyacetophenon, 4,4-Diethylaminobenzophenon, 2,2-Dimethoxy-2-phenyl-acetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Mehtyl-o-benzoylbenzoat, Benzoin, Benzoinethylether, Benzoinisopropylether, Benzoinisobutylether, 2-Hydroxy-2-methyl-1-phenyl-propan-1-on, 2-Isopropylthioxanthon, Dibenzosuberon, 2,4,6-Trimethylbenzoyldiphenylphosphinoxid und Bisacylphosphinoxide, wobei die genannten Photoinitiatoren allein oder in Kombination von zwei oder mehreren der genannten Verbindungen verwendet werden können.

Als UV-Photoinitiatoren können beispielsweise die IRGACURE^{™}-Typen von BASF SE eingesetzt werden, so beispielsweise die Typen IRGACURE 184, IRGACURE 500, IRGACURE 1179, IRGACURE 2959, IRGACURE 745, IRGACURE 651, IRGACURE 369, IRGACURE 907, IRGACURE 1300, IRGACURE 819, IRGACURE 819DW, IRGACURE 2022, IRGACURE 2100, IRGACURE 784, IRGACURE 250, IRGACURE TPO, IRGACURE TPO-L. Ferner sind die DAROCURTM-Typen von BASF SE verwendbar, so beispielsweise die Typen DAROCUR MBF, DAROCUR 1173, DAROCUR TPO und DAROCUR 4265.

Der in den erfindungsgemäßen Massen als Komponente (E) eingesetzte Photoinitiator ist vorzugsweise durch aktinische Strahlung einer Wellenlänge von 200 bis 400 nm aktivierbar, besonders bevorzugt von 250 bis 365 nm. Der radikalische Photoinitiator (E) wird bevorzugt so gewählt, dass dieser nicht bei der Bestrahlung der Masse mit der ersten Wellenlänge λ₁ bereits aktiviert wird. Besonders bevorzugt wird der Photoinitiator (E) im erfindungsgemäßen Verfahren zusammen mit dem zweiten Photoinitiator (B2) durch Bestrahlung der Masse bei der zweiten Wellenlängen λ₂ aktiviert.

Der Photoinitiator (E) liegt in der erfindungsgemäßen Masse bevorzugt in einem Anteil von 0,01 bis 5 Gew.-% vor, bezogen auf das Gesamtgewicht der Masse.

### Formulierung der kationisch polymerisierbaren Massen

Eine Formulierung der Massen für die Verwendung in dem erfindungsgemäßen Verfahren umfasst mindestens die oben beschriebenen Komponenten (A), (B1) und (B2).

Bevorzugt besteht die Masse aus den folgenden Komponenten, jeweils bezogen auf das Gesamtgewicht der Masse:
a) mindestens einer kationisch polymerisierbaren Komponente (A) in einem Anteil von 5 bis 99,98 Gew.-%, wobei die kationisch polymerisierbare Komponente (A) bevorzugt aus der aus epoxidhaltigen Verbindungen (A1), oxetanhaltigen Verbindungen (A2), Vinylethern (A3) sowie Kombinationen davon bestehenden Gruppe ausgewählt ist, wahlweise zusammen mit einem Alkohol als reaktivem Flexibilisierungsmittel (A4) in einem Anteil von 0 bis 80 Gew.-%;
b) dem ersten Photoinitiator (B1) in einem Anteil von 0,01 bis 5 Gew.-%, bevorzugt einem Ferroceniumsalz;
c) dem zweiten Photoinitiator (B2) in einem Anteil von 0,01 bis 5 Gew.-%, bevorzugt einem Arylsulfoniumsalz, einem Aryliodoniumsalz und Kombinationen davon;
d) einem Sensibilisator (C1) für den zweiten Photoinitiator (B2) in einem Anteil von 0 bis 5 Gew.-%;
e) einem Peroxid als Beschleuniger (C2) für die Aushärtung der Masse in einem Anteil von 0 bis 5 Gew.-%;
f) mindestens einer radikalisch polymerisierbaren Verbindung (D) in einem Anteil von 0 bis 50 Gew.-%, bevorzugt 5 bis 50 Gew.-%, weiter bevorzugt auf der Grundlage eines (Meth)acrylats;
g) einem radikalischen Photoinitiator (E) in einem Anteil von 0 bis 5 Gew.%, bevorzugt von 0,01 bis 5 Gew.-%; und
h) weiteren Zusatzstoffen (C) in einem Anteil von 0 bis 70 Gew.-%, bevorzugt weiteren Zusatzstoffen aus der Gruppe der Füllstoffe, Farbstoffe, Pigmente, Alterungsschutzmittel, Fluoreszenzmittel, Stabilisatoren, Beschleuniger, Haftvermittler, Trockenmittel, Vernetzer, Fließverbesserer, Benetzungsmittel, Thixotropierungsmittel, Verdünnungsmittel, nicht reaktiven Flexibilisierungsmittel, nicht reaktiven polymeren Verdickungsmittel, Flammschutzmittel, Korrosionsinhibitoren, Weichmacher und Tackyfier.

Die kationisch polymerisierbare Komponente (A) besteht bevorzugt aus der epoxidhaltigen Komponente (A1) und wahlweise mindestens einem Alkohol (A4) als reaktivem Flexibilisierungsmittel. Alternativ dazu kann die epoxidhaltige Verbindung (A1) ganz oder teilweise durch eine oxetanhaltige Verbindung (A2) ersetzt sein.

Gemäß einer ersten Ausführungsform umfasst oder besteht die Masse bevorzugt aus den folgenden Komponenten, jeweils bezogen auf das Gesamtgewicht der Masse:
0 - 99,8 Gew.-%, bevorzugt 5 bis 99 Gew. -% der epoxidhaltigen Verbindung (A1);
0 - 99,8 Gew.-% der oxetanhaltigen Verbindung (A2);
0 - 80 Gew.-% des reaktiven Flexibilisierungsmittels (A4) auf Basis eines Polyols;
0,01 - 5 Gew.-% des ersten Photoinitiators (B1) für die kationische Polymerisation auf Basis eines Ferroceniumsalzes;
0,01 - 5 Gew.-% des zweiten Photoinitiators (B2) für die kationische Polymerisation auf Basis eines Sulfonium- oder lodoniumsalzes;
0 - 5 Gew.-% eines Sensibilisierungsmittels (C1); und
0-70 Gew.-% eines weiteren Zusatzstoffes (C);
wobei die epoxidhaltige Verbindung (A1) und die oxetanhaltigen Verbindung (A2) alleine oder zusammen in einem Anteil von mindestens 5 Gew.-% in der Masse vorliegen.

In einer zweiten Ausführungsform umfasst oder besteht die Masse bevorzugt aus folgenden Komponenten, jeweils bezogen auf das Gesamtgewicht der Masse:
0 - 95 Gew.-%, bevorzugt 5 bis 95 Gew. -% der epoxidhaltigen Verbindung (A1);
0 - 95 Gew.-% der oxetanhaltigen Verbindung (A2);
0 - 80 Gew.-% des reaktiven Flexibilisierungsmittels (A4) auf Basis eines Polyols;
0,01 - 5 Gew.-% des ersten Photoinitiators (B1) für die kationische Polymerisation auf Basis eines Ferroceniumsalzes;
0,01 - 5 Gew.-% des zweiten Photoinitiators (B2) auf Basis eines Sulfonium oder lodoniumsalzes;
0 - 5 Gew.-% eines Sensibilisierungsmittels (C1);
5-50 Gew.-% mindestens einer radikalisch polymerisierbaren Verbindung (D) aus der Gruppe der (Meth)Acrylate;
0,01 bis 5 Gew.-% eines Photoinitiators (E) für die radikalische Polymerisation; und
0-70 Gew.-% eines weiteren Zusatzstoffes (C);
wobei die epoxidhaltige Verbindung (A1) und die oxetanhaltigen Verbindung (A2) alleine oder zusammen in einem Anteil von mindestens 5 Gew.-% in der Masse vorliegen.

Die erfindungsgemäßen kationisch polymerisierbaren Massen werden bevorzugt als Einkomponentenmassen bereitgestellt.

### Auswahlregeln für die Photoinitiatoren (B1) und (B2)

Erfindungsgemäß werden die oben beschriebenen kationisch polymerisierbaren Massen in einem Verfahren eingesetzt, bei dem die Masse zunächst durch Bestrahlung mit aktinischer Strahlung einer ersten Wellenlänge λ₁ in einem Bereich von 400 bis 600 nm aktiviert und durch anschließende Bestrahlung mit aktinischer Strahlung einer zweiten Wellenlänge λ₂ in einem Bereich von 200 bis 400 nm fixiert wird, wobei die zweite Wellenlänge λ₂ kürzer als die erste Wellenlänge λ₁, ist. Ferner ist erforderlich, dass der zweite Photoinitiator (B2) nach dem Aktivieren der Masse durch Bestrahlung mit aktinischer Strahlung einer ersten Wellenlänge λ₁ in der Masse eine Absorption von aktinischer Strahlung der zweiten Wellenlänge λ₂ aufweist, die für eine Aktivierung des zweiten Photoinitiators (B2) im anschließenden Bestrahlungsschritt ausreichend ist.

Die zur Formulierung der in dem erfindungsgemäßen Verfahren verwendeten kationisch polymerisierbaren Massen eingesetzten Photoinitiatoren (B1) und (B2) können nach den im Folgenden beschriebenen Regeln ausgewählt werden.

Wesentlich für die Auswahl des ersten und des zweiten Photoinitiators für die kationische Polymerisation ist zunächst, dass der erste Photoinitiator (B1) bei der ersten Wellenlänge λ₁ aktivierbar ist, ohne dass gleichzeitig der in der Masse enthaltene zweite Photoinitiator (B2) aktiviert wird. Ferner wird der erste Photoinitiator (B1) so gewählt, dass die nach der Aktivierung des Photoinitiators (B1) durch Bestrahlung mit der Wellenlänge λ₁, in der Masse gebildeten Zerfallsprodukte eine möglichst uneingeschränkte Aktivierung des zweiten Photoinitiators (B2) in der Masse durch Bestrahlung bei der Wellenlänge λ₂ zulassen.

Dies kann durch die Auswahl der Photoinitiatoren, durch die Verwendung geeigneter Sensibilisierungsmittel und durch das Konzentrationsverhältnis der Photoinitiatoren (B1) und (B2) zueinander eingestellt werden. Ferner spielt auch die Absorption der übrigen Komponenten (A), (C), (D) und (E) der Masse in Bezug auf das Absorptionsverhalten des zweiten Photoinitiators (B2) bei der zweiten Wellenlänge λ₂ eine Rolle.

Zur Auswahl geeigneter Photoinitiatoren (B) können UV/VIS-Spektren der Photoinitiatoren (B1), (B2) und der wahlweise verwendeten Sensibilisierungsmittel (C1) in einem geeigneten Lösungsmittel aufgenommen werden. Zunächst wird durch Aufnahme eines UV/VIS-Spektrums das Absorptionsverhalten des Gemischs der Photoinitiatoren (B1) und (B2) vor dem Eintrag aktinischer Strahlung betrachtet. Der Photoinitiator (B1) gilt im Sinne der Erfindung als hinreichend aktivierbar, wenn durch Absorption aktinischer Strahlung bei der vorbestimmten Wellenlänge λ₁ eine kationische Polymerisation initiiert und der zweite Photoinitiator (B2) dabei nicht gleichzeitig aktiviert wird. Die Wellenlänge λ₁ entspricht bevorzugt dem Anregungsmaximum des Photoinitiators (B1) und liegt außerhalb eines Anregungsbereiches des Photoinitiators (B2).

Anschließend wird das Absorptionsverhalten des Gemischs der Photoinitiatoren (B1) und (B2) nach dem Bestrahlen mit aktinischer Strahlung der Wellenlänge λ₁ durch Messung eines UV/VIS-Spektrums erneut betrachtet, um die Eignung des Photoinitiators (B2) in Bezug auf eine Aktivierung durch Bestrahlung bei der Wellenlänge λ₂ zu beurteilen. Der Photoinitiator (B2) gilt im Sinne der Erfindung als hinreichend aktivierbar, wenn durch Absorption aktinischer Strahlung bei der vorbestimmten Wellenlänge λ₂ der Photoinitiator (B2) aktiviert wird und in der Masse eine Hautbildung stattfindet. Die Absorptionsbande des Photoinitiators (B2) bei der Wellenlänge λ₂ muss dazu oberhalb der Absorption von (B1) und den nach der Aktivierung des Photoinitiators (B1) gebildeten Zerfallsprodukten (B1') liegen. Die Wellenlänge λ₂ entspricht dabei bevorzugt dem Anregungsmaximum des zweiten Photoinitiators (B2).

Im dem Falle, dass die Absorption der Photoinitiatoren (B1) und (B2) durch in der Masse enthaltene Komponenten wie Füllstoffe, Pigmente oder die eingesetzten Harzkomponenten bei den Wellenlängen λ₁ und λ₂ eingeschränkt ist, kann durch Aufnahme und Beurteilung von UV/VIS-Spektren der formulierten Masse, welche die Komponenten (A), (C), sowie wahlweise (D) und (E) enthält, eine Auswahl bezüglich der Photoinitiatoren (B1) und (B2) unter Anwendung eines analogen Vorgehens getroffen werden.

### Verwendung des erfindungsgemäßen Verfahrens

Das erfindungsgemäße Verfahren eignet sich für das Verkleben, Vergießen, Abformen, Abdichten und Beschichten von Substraten. Insbesondere für Fertigungsprozesse, bei denen eine schnelle Anfangsfestigkeit und gleichzeitig eine sichere Endaushärtung, bevorzugt ohne zusätzlichen Wärmeeintrag, gefordert sind, lässt sich das erfindungsgemäße Verfahren vorteilhaft einsetzen.

Das erfindungsgemäße Verfahren umfasst die folgenden Schritte:
a) Bereitstellen einer kationisch härtbaren Masse gemäß der obigen Beschreibung;
b) Dosieren der Masse auf ein erstes Substrat;
c) Aktivieren der Masse durch Bestrahlen mit aktinischer Strahlung der ersten Wellenlänge λ₁;
d) wahlweise Zuführen eines zweiten Substrates zur aktivierten Masse auf dem ersten Substrat unter Bildung eines Substratverbundes, und weiter wahlweise Ausrichten beider Substrate zueinander;
e) Fixieren der aktivierten Masse durch Bestrahlen mit aktinischer Strahlung der zweiten Wellenlänge λ₂; und
f) wahlweise Erwärmen der fixierten Masse auf dem ersten Substrat oder in dem Substratverbund.

Das Verfahren ist dadurch gekennzeichnet, dass die katonisch härtbare Masse mindestens eine kationisch polymerisierbare Komponente und einen ersten Photoinitiator umfasst, der bei Bestrahlung mit aktinischer Strahlung einer ersten Wellenlänge λ₁, nm eine Säure freisetzt; sowie einem zweiten Photoinitiator, der bei Bestrahlung mit aktinischer Strahlung einer zweiten Wellenlänge λ₂ eine Säure freisetzt, wobei die zweite Wellenlänge λ₂ kürzer als die erste Wellenlänge λ₁, ist, wobei der erste und der zweite Photoinitiator so ausgewählt werden, dass der erste Photoinitiator bei einer ersten Wellenlänge λ₁ von 460 nm aktivierbar ist, ohne dass gleichzeitig der zweite Photoinitiator aktiviert wird, und wobei eine Absorptionsbande des zweiten Photoinitiators bei einer Wellenlänge λ₂ von 365 nm nach der Aktivierung des ersten Photoinitiators oberhalb der Absorption des ersten Photoinitiators und der nach der Aktivierung gebildeten Zerfallsprodukte liegt, so dass der zweite Photoinitiator nach Aktivieren der Masse in Schritt c) in der Masse eine Absorption von aktinischer Strahlung der zweiten Wellenlänge λ₂ aufweist, die für eine Aktivierung des zweiten Photoinitiators in Schritt e) ausreichend ist, wobei in der Masse eine Hautbildung stattfindet.

Zur Aktivierung wird die Masse in Schritt c) vorzugweise mit aktinischer Strahlung einer Wellenlänge λ₁ in einem Bereich von 400 bis 600 nm bestrahlt, bevorzugt einer Wellenlänge von 460 ± 20 nm.

In Schritt e) wird die Masse bevorzugt mit aktinischer Strahlung einer Wellenlänge λ₂ in einem Bereich von 200 bis 400 nm bestrahlt, vorzugsweise bei 365 ± 20 nm.

Die Bestrahlung erfolgt bevorzugt mit einer Strahlungsquelle, die ein Strahlungsspektrum mit einem singulären Emissionspeak bei der Wellenlänge λ₁ aufweist. Halogenlampen oder jede Art der Breitbandstrahler sind für die Zwecke der Erfindung nicht bevorzugt Im Gegensatz zur Bestrahlung mit Lampen, die ein kontinuierliches Strahlungsspektrum emittieren oder mehrere, über ein Wellenlängenband verteilte Emissionsmaxima aufweisen, gestattet die Verwendung von Strahlungsquellen mit singulärem Emissionspeak die gezielte Anregung der in der kationischen Masse enthaltenen Photoinitiatoren (B1) und (B2). Bevorzugt ist die Strahlungsquelle eine LED-Bestrahlungslampe.

Bei Verwendung einer sogenannten Durchflussapparatur kann der Aktivierungsschritt c) vor dem Dosierungsschritt b) erfolgen. Geeignete Dosiervorrichtungen zur Durchflussaktivierung der Massen durch Bestrahlung sind in der DE 3 702 999 und der DE 10 2007 017 842 beschrieben.

Sowohl das Zuführen eines zweiten Substrates in Schritt d) als auch die Bestrahlung mit der zweiten Wellenlänge λ₂ in Schritt e) erfolgt innerhalb der Offenzeit der aktivierten Masse, da sonst kein uneingeschränktes Anfließen der Masse an das zweite Substrat und/oder eine uneingeschränkte Aktivierung des zweiten Photoinitiators (B2) mehr gewährleistet ist.

Bevorzugte Anwendungen des erfindungsgemäßen Verfahrens umfassen insbesondere das Vergießen von Schaltern, Steckern und/oder Relais.

Weiter bevorzugt ist der Einsatz des erfindungsgemäßen Verfahrens bei der Fertigung von elektrooptischen Aufbauten wie Kameramodulen. Insbesondere für sogenannte Active Alignment Prozesse, wie sie in der US 8 542 451 beschrieben werden, kann das Verfahren eingesetzt werden. Vorteilhaft gegenüber dem Stand der Technik ist, dass die Massen durch Bestrahlung mit der ersten Wellenlänge λ₁ aktiviert werden und innerhalb der Offenzeit uneingeschränkt mit einem zweiten Substrat kontaktiert werden können. So können beispielsweise Komponenten wie der Objektivtubus relativ zum Bildsensor oder einer entsprechenden Haltevorrichtung ausgerichtet werden, nachdem die Masse dosiert und bereits durch Bestrahlung bei der ersten Wellenlänge λ₁ aktiviert wurde. Die Ausrichtung der Optik in verschiedenen Ebenen erfolgt typischerweise bei eingeschaltetem Sensor unter Auswertung von optischen Messsignalen und Anpassung der Position des Objektivtubus, oder alternativ der Position des Sensors durch einen Mikromanipulator oder Robotervorrichtungen. Sobald eine ausreichend hohe Güte der Messsignale erreicht wird, kann die entsprechende Position durch Bestrahlung mit aktinischer Strahlung der Wellenlänge λ₂ und Aktivierung des Photoinitiators (B2) fixiert werden. Der Kameraaufbau besitzt unmittelbar nach der Bestrahlung bei der Wellenlänge λ₂ eine ausreichende Handlingsfestigkeit, und kann weiteren Prozessschritten zugeführt werden. Die Endaushärtung erfolgt bei Raumtemperatur ohne zusätzlichen Wärmeeintrag innerhalb von höchstens 7 Tagen. Dies ist besonders vorteilhaft, da so auf kostspielige und energieintensive Heizeinrichtungen verzichtet werden kann.

Die verwendeten Massen für das erfindungsgemäße Verfahren zeichnen sich neben hohen Lichtfixierfestigkeiten nach dem zweiten Bestrahlungsschritt ferner durch hohe Zuverlässigkeit und Beständigkeit nach der vollständigen Aushärtung aus, wie diese von kationischen Massen bekannt sind.

### Härtung der erfindungsgemäßen Massen

Bei Raumtemperatur erreichen die erfindungsgemäßen Massen unmittelbar nach der Aktivierung des zweiten Photoinitiators eine ausreichende Handlingsfestigkeit ("green strength"), welche für eine Weiterverarbeitung gefertigter Bauteile ausreicht. Insbesondere gilt in Fügeverfahren eine ausreichende Handlingsfestigkeit als erreicht, wenn vorzugsweise eine Scherfestigkeit von ≥ 1 MPa erzielt wird.

Die Endaushärtung erfolgt bei Raumtemperatur innerhalb von höchstens 7 Tagen, bevorzugt innerhalb von 5 Tagen und besonders bevorzugt innerhalb von 3 Tagen. Die Härtungsreaktion kann durch Erwärmen beschleunigt werden.

Bei einer Temperatur von 60 °C lassen sich die Massen innerhalb von 4 h, bevorzugt innerhalb von 2 h, vollständig aushärten. Bei einer Temperatur von 80 °C kann die Härtung typischerweise innerhalb von 2 h, bevorzugt innerhalb von 1 h, abgeschlossen werden.

Temperaturabgestufte Härtungsprofile sind ebenfalls im Sinne der Erfindung.

Der Wärmeeintrag kann beispielsweise in Konvektionsöfen, durch Thermoden, IR-Strahler, Laser oder Induktion erfolgen.

### Verwendete Messverfahren und Definitionen

### Bestrahlung

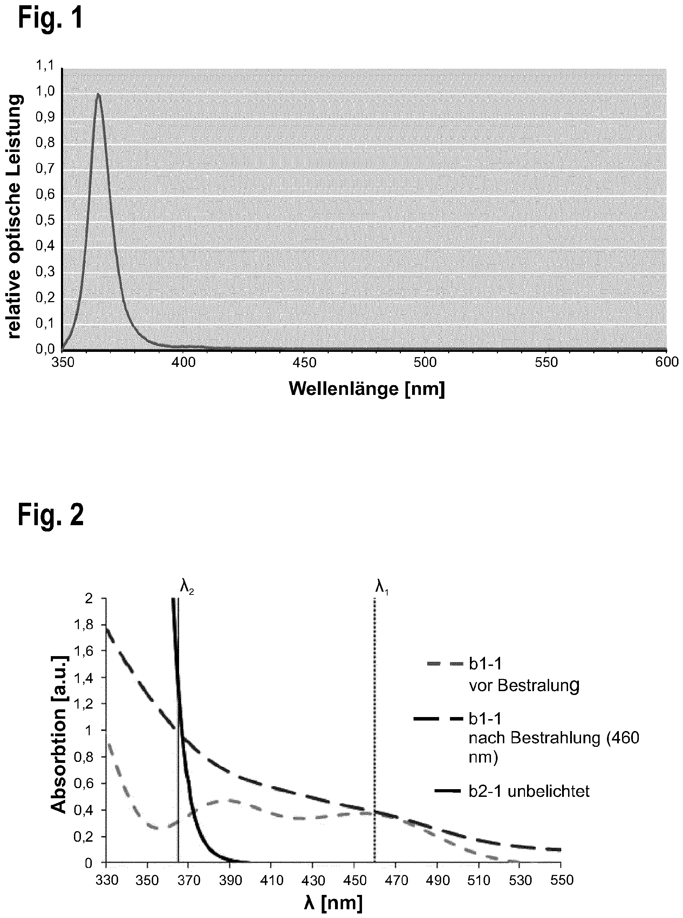

Zur Aktivierung des Photoinitiators (B1) wurden die erfindungsgemäßen Massen mit einer LED-Lampe DELOLUX 20/460 der Firma DELO Industrie Klebstoffe GmbH & Co. KGaA mit einem Emissionsmaximum bei 460 nm mit einer Intensität von 200 ± 20 mW/cm² für eine Dauer von 30 s bestrahlt. Zur anschließenden Aktivierung des Photoinitiators (B2) und wahlweise des radikalischen Photoinitiators (E) wurden die erfindungsgemäßen Massen mit einer LED-Lampe DELOLUX 20 / 365 der Firma DELO Industrie Klebstoffe GmbH & Co. KGaA mit einem Emissionsmaximum von 365 nm mit einer Intensität von 200 ± 20 mW/cm² für eine Dauer von 30 s bestrahlt. Das Emissionsspektrum der LED-Lampe DELOLUX 20 / 365 ist bespielhaft in Fig. 1 gezeigt.

### Aushärtung

"Vernetzung" oder "Aushärtung" werden definiert als Polymerisations- oder Additionsreaktion über den Gelpunkt hinaus. Der Gelpunkt ist der Punkt, an dem das Speichermodul G' gleich dem Verlustmodul G" wird. Die Aushärtung der Prüfkörper erfolgte bei Raumtemperatur für 7 Tage.

### Raumtemperatur

Raumtemperatur ist definiert als 23 ± 2 °C.

### Beurteilung der Lichtfixierung

Zur Beurteilung der Lichtfixierung (fest vs. flüssig) werden die Massen einer optischen Beurteilung unterzogen. Optional erfolgt eine haptische Prüfung unter Zuhilfenahme eines Kunststoffspatels.

### Offenzeit

Als Offenzeit gilt diejenige Zeit zwischen der Aktivierung der Masse durch Bestrahlung bis zum Beginn einer Hautbildung. Die Hautbildung wird dabei haptisch an einem aktivierten Klebstofftropfen mit einem Spatel geprüft. Eine Haut gilt als gebildet sobald kein Fadenzug mehr erfolgt. Die Offenzeit der beschriebenen Massen ist insbesondere von Temperatur und Bestrahlungsdosis abhängig.

### UV/VIS-Transmission

Die Transmission der Massen wurde mit einem UV/VIS-Spektrometer des Typs SPECORD 50 PLUS, erhältlich von der Firma Analytik Jena, bestimmt. Die Messungen erfolgten gemäß der DIN 5036-3.

### Herstellung der härtbaren Massen

Zur Herstellung der in den folgenden Beispielen verwendeten kationisch härtbaren Massen werden zunächst die flüssigen Bestandteile gemischt und anschließend die Füllstoffe und wahlweise weitere Feststoffe mithilfe eines Laborrührwerks, Labordissolvers oder eines Speedmixers (Fa. Hauschild) eingearbeitet, bis eine homogene Masse entsteht. Massen, die Photoinitiatoren enthalten und die sensitiv gegenüber sichtbaren Licht sind, müssen entsprechend unter Licht außerhalb der Anregungswellenlänge der Photoinitiatoren oder Sensibilisatoren hergestellt werden.

In der nachfolgenden Liste sind alle zur Herstellung der härtbaren Massen verwendeten Verbindungen und deren Abkürzungen angegeben:

### Komponente (A): Kationisch polymerisierbare Bestandteile

### (A1) epoxidhaltige Verbindungen

(a1-1): 3,4-Epoxycyclohexylmethyl-3',4'-epoxycyclohexancarboxylat, erhältlich unter dem Handelsnamen Celloxide 2021 P von der Fa. Daicel

### (A2) oxetanhaltiae Verbindungen:

(a2-1): OXT-221 = Bis[1-Ethyl(3-oxetanyl)]methyl ether; erhältlich von der Fa. Toagosei
(a2-2): OXT-101 = 3-Ethyl-3-hydroxymethyl-oxetane; erhältlich von der Fa. Toagosei)

### (A4) Polyole

(a4-1): Eternacoll UM90 = aliphatisches Polycarbonatdiol, erhältlich von der Firma UBE Industries Ltd.

### Komponente (B): Photoinitiatoren für die kationische Polymerisation

### (B1) Photoinitiator auf Metalloceniumbasis

(b1-1): R-gen 262 = (η⁵-2,4-cyclopentadien-1-yl)[(1,2,3,4,5,6-η)-(1-methylethyl)benzene]-Eisen(I)-hexafluoroantimonate; 50 %-ig in Propylencarbonat; erhältlich von der Firma Chitec.

### (B2) Photoinitiator auf Oniumbasis

(b2-1): Chivacure 1176 = Diphenyl(4-phenylthio)phenylsulfonium hexafloroatimonate und (Thiodi-4,1-phenylene)bis(diphenylsulfonium) dihexafluoroatimonate, 50 %-ig in Propylencarbonat; erhältlich von der Fa. Chitec.
(b2-2): Bluesil 2074 = (tolylcumyl)iodonium tetrakis(pentafluorophenyl) borate, erhältlich von der Firma Bluestar.
(b2-3): UVI-6976 = Mischung von PhS-(C₆H₄)-S⁺Ph₂ SbF₆⁻ und Ph₂S⁺⁻(C₆H₄)S(C₆H₄)-S⁺Ph₂ (SbF₆⁻)₂, 50 %-ig in Propylencarbonat; erhältlich von der Firma Dow Chemicals.
(b2-4): Esacure 1064 = Mischung von PhS-(C₆H₄)-S⁺-Ph₂ PF₆⁻ und Ph₂S⁺-(C₆H₄)-S-(C₆H₄)-S⁺Ph₂ (PF₆⁻)₂, 50 %-ig in Propylencarbonat; erhältlich von der Firma Lamberti.

### Komponente (C): Zusatzstoffe

### (C1) Sensibilisierungsmittel:

(c1-1): Speedcure 2-ITX = 2-lsopropylthioxanthone, erhältlich von der Fa. Lambson Ltd.

### Ausführungsbeispiele

Zur Durchführung des erfindungsgemäßen Verfahrens wurden zunächst die in den folgenden Beispielen beschrieben härtbaren kationischen Massen mit den in der nachfolgenden Tabelle angegebenen Anteilen der Komponenten (A) bis (E) formuliert.

Für die Beurteilung der Eigenschaften wurden jeweils 50 mg der Massen aus den Beispielen eingesetzt.

λ₁ entspricht in den folgenden Beispielen 460 nm und λ₂ 365 nm.

Wenn nicht anders angegeben, wurde bei den unterschiedlichen Wellenlängen jeweils mit einer Intensität von 200 mW/cm² für 30 s bestrahlt.

Die Endaushärtung der Massen wurde nach 7 Tagen Lagerung bei Raumtemperatur beurteilt.

### Aufnahme von UV/VIS-Spektren zur Auswahl der Photoinitiatoren

Die Eignung eines Gemischs von Photoinitiatoren zur Verwendung in dem erfindungsgemäßen Verfahren wurde durch Messung der UV/VIS-Transmission des Gemischs in Propylencarbonat (50 gew.-%ig) als Lösungsmittel bestimmt, und zwar vor und nach Bestrahlung des Gemischs der Photoinitiatoren bei der Wellenlänge λ₁ von 460 nm. Als Photoinitiatoren wurden die oben bezeichneten Verbindungen b1-1 und b2-1 eingesetzt. Das Stoffmengenverhältnis der Verbindungen b2-1 [mmol] und b1-1 [mmol] betrug im ersten Gemisch 1,5 : 0,5, wie im nachfolgenden Beispiel 1 angegeben, und im zweiten Gemisch 0,5 : 0,5, wie im nachfolgenden Beispiel 7 angegeben.

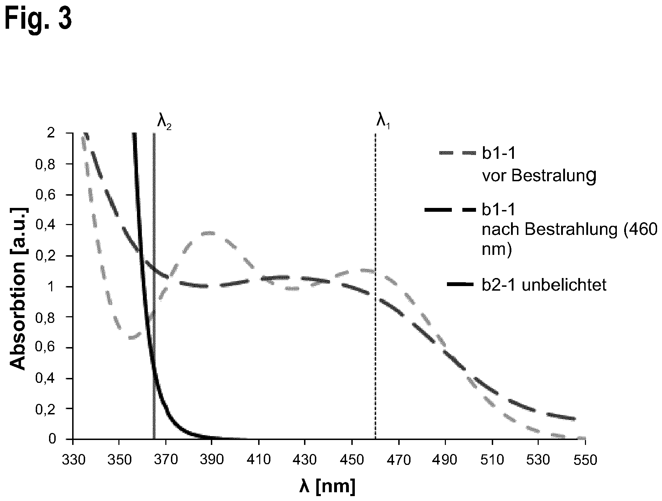

Die so erhaltenen UV/VIS-Spektren sind in den Figuren 2 und 3 dargestellt.

Die Spektren in Fig. 2 zeigen, dass das Photoinitiatorgemisch von Beispiel 1 uneingeschränkt im erfindungsgemäßen Verfahren einsetzbar ist. Eine Fixierung der Masse durch Aktivierung des Photoinitiators (B2) mit aktinischer Strahlung der Wellenlänge λ₂ (365 nm) ist auch nach Bestrahlung des Gemischs bei der Wellenlänge λ₁ uneingeschränkt möglich.

Das Photoinitiatorgemisch von Beispiel 7 eignet sich dagegen nicht zur Formulierung einer für die Verwendung im erfindungsgemäßen Verfahren geeigneten, kationisch härtbaren Masse. Die Masse von Beispiel 7 lässt sich zwar durch Bestrahlung mit aktinischer Strahlung der Wellenlänge λ₁, (460 nm) aktivieren. Jedoch ist das Absorptionsverhalten des Gemischs durch die Zersetzung des Photoinitiators (B1) nach der Aktivierung so verändert, dass keine Aktivierung des zweiten Photoinitiators (B2) durch bei Bestrahlung bei λ₂ (365 nm) mehr möglich ist. Damit verbleibt die Masse unmittelbar nach Bestrahlung mit λ₂ im flüssigen Zustand.

| **Komponente** | **Beispiele zur Durchführung des erfindungsgemäßen Verfahrens** | | | | | **Vergleichsbeispiele Gew.-%** | | | |
|---|---|---|---|---|---|---|---|---|---|
| **Bsp. Nummer** | **1** | **2** | **3** | **4** | **5** | **6** | **7** | **8** | **9¹⁾** |
| **Komponente (A): Kationisch polymerisierbare Bestandteile [Gew.-%]** | | | | | | | | | |
| (a1-1) | 48,57 | 87 | 87 | 86,95 | 87,9 | 48,2 | 48,86 | 50 | 51,4 |
| (a2-1) | | 10,96 | 8,53 | 10 | 10 | | | | |
| (a2-2) | | | | | | | | | 45,9 |
| (a4-1) | 48,5 | | | | | 48,5 | 48,9 | 48,7 | |

| **Komponente (B): Photoinitiatoren für die kationische Polymerisation [Gew.-%]** | | | | | | | | | |
|---|---|---|---|---|---|---|---|---|---|
| (b1-1) 50 gew.-%ig in Propylencarbonat | 0,48 | 1,43 | 2,85 | 1,43 | 0,48 | 0 | 1,43 | 0,48 | |
| (b2-1) 50 gew.-%ig in Propylencarbonat | 2,45 | | | | | 3,3 | 0,81 | 0,82 | |
| Stoffmengenverhältnis (b2-1) [mmol] / (b1-1) [mmol] | 1,5 : 0,5 | | | | | 2 : 0 | 0,5 : 1,5 | 0,5 : 0,5 | |
| (b2-2) | | 0,51 | 1,52 | 1,52 | 1,52 | | | | |
| Stoffmengenverhältnis (b2-2) [mmol] / (b1-1) [mmol] | | 0,5 : 1,5 | 1,5 : 3 | 1,5 : 1,5 | 1,5 : 0,5 | | | | |
| (b2-3) 50 gew.-%ig in Propylencarbonat | | | | | | | | | 2 |
| (b2-4) 50 gew.-%ig in Propylencarbonat | | | | | | | | | 0,7 |
| Stoffmengenverhältnis (b2-4) [mmol] / (b2-3) [mmol] | | | | | | | | | 0,51 : 1,22 |

| **Komponente (C): Zusatzstoffe [Gew.-%]** | | | | | | | | | |
|---|---|---|---|---|---|---|---|---|---|
| **(c1-1)** | | 0,1 | 0,1 | 0,1 | 0,1 | | | | |

| **Eigenschaften der Massen** | | | | | | | | | |
|---|---|---|---|---|---|---|---|---|---|
| **Habitus nach 30 s Belichtung bei λ₂ = 365 nm** | fest | fest | fest | fest | fest | fest | fest | fest | fest |
| **Habitus nach 30 s Belichtung bei λ₁ = 460 nm** | flüssig | flüssig | flüssig | flüssig | flüssig | flüssig | flüssig | flüssig | flüssig |
| **Habitus nach sequentieller Belichtung je 30 s bei λ₁ =460 nm und λ_{2 =} 365 nm** | fest | fest | fest | fest | fest | fest | flüssig | flüssig | fest |
| **Belichtung bei λ₁ = 460 nm Habitus nach 7 d** | fest | fest | fest | fest | fest | flüssig | fest | fest | flüssig |
| **"UV-Spektren - Auswahlkriterium erfüllt"** | ja | ja | ja | ja | ja | nein | nein | nein | nein |

| | | | | | | | | | |
|---|---|---|---|---|---|---|---|---|---|
| ¹⁾ Vergleichsbeispiel 9 in Anlehnung an US 7 964 248 B2 | | | | | | | | | |

Die Massen der Beispiele 1 bis 5 erlauben die Durchführung des erfindungsgemäßen Verfahrens. Die beschriebenen Massen sind jeweils durch Bestrahlung mit aktinischer Strahlung der Wellenlänge λ₁ (460 nm) aktivierbar und verbleiben zunächst im flüssigen Zustand. Innerhalb von 7 Tagen härten die durch Bestrahlen bei λ₁ aktivierten Massen, auch ohne zusätzlichen Wärmeeintrag, bei Raumtemperatur zuverlässig aus.

Die Massen der Beispiele 1 bis 5 zeichnen sich dadurch aus, dass diese nach Aktivierung bei λ₁ durch Bestrahlung mit aktinischer Strahlung der Wellenlänge λ₂ (365 nm) unter Bildung einer Haut in einen formstabilen Zustand überführt werden können. So lassen sich die Massen beispielsweise nach dem Dosieren auf ein erstes Substrat durch Bestrahlung mit Licht der Wellenlänge λ₁ aktivieren. Innerhalb der Offenzeit kann ein zweites Substrat zu der aktivierten Masse zugeführt und wahlweise relativ zum ersten Substrat ausgerichtet werden. Eine anschließende Bestrahlung bei der Wellenlänge λ₂ erlaubt eine Fixierung der Masse und damit auch eine Fixierung der beiden Substrate zueinander. Die Endaushärtung erfolgt bei Raumtemperatur über einen Zeitraum von bis zu 7 Tagen, kann aber wahlweise durch Erwärmen beschleunigt werden. Eine ausschließliche Belichtung mit λ₂ (365 nm) für 30 s führt dagegen zu einer unmittelbaren Hautbildung der Masse, so dass das Fügen eines zweiten Substrates nicht mehr möglich ist.

Die Massen der Beispiele 6 bis 9 sind Vergleichsbeispiele, die sich nicht für die Verwendung im erfindungsgemäßen Verfahren eignen. Die Masse aus Vergleichsbeispiel 6 verzichtet auf einen Photoinitiator (B1), welcher bei λ₁ aktivierbar ist. Eine Bestrahlung mit λ₂ führt zu einer Härtung der Masse. Jedoch kann die kationisch härtbare Masse nicht gemäß Schritt c) des erfindungsgemäßen Verfahrens voraktiviert werden.

Die Masse des Vergleichsbeispiel 7 lässt sich mit λ₁ aktivieren. Jedoch führt die Bestrahlung mit λ₁ zu einer Zersetzung des ersten Photoinitiators (B1), derart dass die Absorption des zweiten Photoinitiators (B2) bei der Wellenlänge λ₂ nicht mehr ausreichend ist, um in Schritt e) des beschriebenen Verfahrens aktiviert zu werden. Die vergleichbare Masse aus Beispiel 1, die einen höheren Stoffmengenanteil des zweiten Photoinitiators (B2) im Vergleich zum ersten Photoinitiator (B1) aufweist und damit auch ein anderes Absorptionsverhalten zeigt, eignet sich dagegen uneingeschränkt zur Verwendung in dem erfindungsgemäßen Verfahren.

Die Masse aus Vergleichsbeispiel 8 besitzt äquimolare Anteile der beiden Photoinitiatoren (B1) und (B2). Ähnlich wie in Beispiel 7 kann mit dieser Masse keine sequentielle Belichtung im Sinne des erfindungsgemäßen Verfahrens durchgeführt werden. Eine Bestrahlung mit λ₁ oder λ₂ führt zwar zu einer Härtung der Masse. Jedoch erlaubt die veränderte Absorption des ersten Photoinitiators (B1) nach der Aktivierung in Schritt c) des erfindungsgemäßen Verfahrens keine uneingeschränkte Aktivierung des zweiten Photoinitiators (B2).

Die Masse aus Vergleichsbeispiel 9 entspricht der Formulierung aus Beispiel 8 der US 796,4248 B2 und eignet sich nicht für die Durchführung des erfindungsgemäßen Verfahrens. Es kommen zwei verschiedene Photoinitiatoren auf Basis von Sulfoniumsalzen mit unterschiedlichen Gegenionen zum Einsatz. Bei sequentieller Belichtung nach dem erfindungsgemäßen Verfahren erfolgt bei Bestrahlung mit der Wellenlänge λ₁ keine Aktivierung der Masse. Die Bestrahlung mit λ₂ führt zwar zu einer Härtung der Masse. Jedoch erfolgt in nicht durchstrahlbaren Bereichen im Rahmen von Fügeprozessen aufgrund der fehlenden Aktivierung des Photoinitiators (B1) keine vollständige Aushärtung.

## Patentansprüche

1. Kationisch härtbare Masse mit
a) mindestens einer kationisch polymerisierbaren Komponente;
b) einem ersten Photoinitiator, der bei Bestrahlung mit aktinischer Strahlung einer ersten Wellenlänge λ₁ eine Säure freisetzt;
c) einem zweiten Photoinitiator, der bei Bestrahlung mit aktinischer Strahlung einer zweiten Wellenlänge λ₂ eine Säure freisetzt, wobei der zweite Photoinitiator ein Arylsulfoniumsalz umfasst;
wobei die zweite Wellenlänge λ₂ kürzer als die erste Wellenlänge λ₁ ist, wobei der erste und der zweite Photoinitiator so ausgewählt sind, dass der erste Photoinitiator bei einer ersten Wellenlänge λ₁ von 460 nm aktivierbar ist, ohne dass gleichzeitig der zweite Photoinitiator aktiviert wird, und wobei eine Absorptionsbande des zweiten Photoinitiators bei einer Wellenlänge λ₂ von 365 nm nach der Aktivierung des ersten Photoinitiators oberhalb der Absorption des ersten Photoinitiators und der nach der Aktivierung gebildeten Zerfallsprodukte liegt, so dass der zweite Photoinitiator nach Bestrahlen der Masse mit aktinischer Strahlung der ersten Wellenlänge λ₁ in der Masse eine Absorption von aktinischer Strahlung der zweiten Wellenlänge λ₂ aufweist, die ausreichend ist, um den zweiten Photoinitiator zu aktivieren und die Masse zu fixieren, wobei in der Masse eine Hautbildung stattfindet.

2. Masse nach Anspruch 1, **dadurch gekennzeichnet, dass** die kationisch polymerisierbare Komponente eine Verbindung umfasst, die aus der aus epoxidhaltigen Verbindungen, oxetanhaltigen Verbindungen und Vinylethern sowie Kombinationen davon bestehenden Gruppe ausgewählt ist, wahlweise zusammen mit einem Polyol als reaktivem Flexibilisierungsmittel.

3. Masse nach Anspruch 1 oder 2, **dadurch gekennzeichnet, dass** der erste Photoinitiator eine Metalloceniumverbindung ist, bevorzugt ein Ferroceniumsalz.

4. Masse nach einem der vorhergehenden Ansprüche, **dadurch gekennzeichnet, dass** die Masse ferner ein Peroxid als Beschleuniger für die Härtung der Masse umfasst.

5. Masse nach einem der vorhergehenden Ansprüche, **dadurch gekennzeichnet, dass** die Masse ferner eine oder mehrere radikalisch polymerisierbare Verbindungen auf Basis von (Meth)acrylaten in einem Anteil von bis zu 50 Gew.-%, bezogen auf das Gesamtgewicht der Masse, und einen radikalischen Photoinitiator umfasst, wobei der radikalische Photoinitiator durch Bestrahlung mit aktinischer Strahlung bei der Wellenlänge λ₂ aktivierbar ist, jedoch nicht bei der Wellenlänge λ₁.

6. Masse nach einem der vorhergehenden Ansprüche, **dadurch gekennzeichnet, dass** die Masse aus den folgenden Komponenten besteht, jeweils bezogen auf das Gesamtgewicht der Masse:
a) mindestens einer kationisch polymerisierbaren Komponente (A) in einem Anteil von 5 bis 99,98 Gew.-%, wobei die kationisch polymerisierbare Komponente (A) bevorzugt aus der aus epoxidhaltigen Verbindungen (A1), oxetanhaltigen Verbindungen (A2), Vinylethern (A3) sowie Kombinationen davon bestehenden Gruppe ausgewählt ist, wahlweise zusammen mit einem Alkohol als reaktivem Flexibilisierungsmittel (A4) in einem Anteil von 0 bis 80 Gew.-%;
b) dem ersten Photoinitiator (B1) in einem Anteil von 0,01 bis 5 Gew.-%, bevorzugt einem Ferroceniumsalz;
c) dem zweiten Photoinitiator (B2) in einem Anteil von 0,01 bis 5 Gew.%, bevorzugt einem Arylsulfoniumsalz, einem Aryliodoniumsalz und Kombinationen davon;
d) einem Sensibilisator (C1) für den zweiten Photoinitiator (B2) in einem Anteil von 0 bis 5 Gew.-%;
e) einem Peroxid als Beschleuniger (C2) für die Aushärtung der Masse in einem Anteil von 0 bis 5 Gew.-%;
f) mindestens einer radikalisch polymerisierbaren Verbindung (D) in einem Anteil von 0 bis 50 Gew.-%, bevorzugt 5 bis 50 Gew.-%, weiter bevorzugt auf der Grundlage eines (Meth)acrylats;
g) einem radikalischen Photoinitiator (E) in einem Anteil von 0 bis 5 Gew.-%, bevorzugt von 0,01 bis 5 Gew.-%; und
h) weiteren Zusatzstoffen (C) in einem Anteil von 0 bis 70 Gew.-%, bevorzugt weiteren Zusatzstoffen aus der Gruppe der Füllstoffe, Farbstoffe, Pigmente, Alterungsschutzmittel, Fluoreszenzmittel, Stabilisatoren, Beschleuniger, Haftvermittler, Trockenmittel, Vernetzer, Fließverbesserer, Benetzungsmittel, Thixotropierungsmittel, Verdünnungsmittel, nicht reaktiven Flexibilisierungsmittel, nicht reaktiven polymeren Verdickungsmittel, Flammschutzmittel, Korrosionsinhibitoren, Weichmacher und Tackyfier.

7. Verfahren zum Fügen, Vergießen, Abformen, Abdichten und Beschichten von Substraten unter Verwendung einer kationisch härtbaren Masse, wobei das Verfahren die folgenden Schritte umfasst:
a) Bereitstellen einer kationisch härtbaren Masse gemäß einem der vorhergehenden Ansprüche;
b) Dosieren der Masse auf ein erstes Substrat;
c) Aktivieren der Masse durch Bestrahlen mit aktinischer Strahlung einer ersten Wellenlänge λ₁;
d) wahlweise Zuführen eines zweiten Substrates zur aktivierten Masse auf dem ersten Substrat unter Bildung eines Substratverbundes, und weiter wahlweise Ausrichten beider Substrate zueinander;
e) Fixieren der aktivierten Masse durch Bestrahlen mit aktinischer Strahlung einer zweiten Wellenlänge λ₂; und
f) wahlweise Erwärmen der fixierten Masse auf dem ersten Substrat oder in dem Substratverbund.
**dadurch gekennzeichnet, dass** die katonisch härtbare Masse mindestens eine kationisch polymerisierbare Komponente und einen ersten Photoinitiator umfasst, der bei Bestrahlung mit aktinischer Strahlung einer ersten Wellenlänge λ₁ nm eine Säure freisetzt; sowie einem zweiten Photoinitiator, der bei Bestrahlung mit aktinischer Strahlung einer zweiten Wellenlänge λ₂ eine Säure freisetzt, wobei die zweite Wellenlänge λ₂ kürzer als die erste Wellenlänge λ₁ ist,
wobei der erste und der zweite Photoinitiator so ausgewählt werden, dass der erste Photoinitiator bei einer ersten Wellenlänge λ₁ von 460 nm aktivierbar ist, ohne dass gleichzeitig der zweite Photoinitiator aktiviert wird, und wobei eine Absorptionsbande des zweiten Photoinitiators bei einer Wellenlänge λ₂ von 365 nm nach der Aktivierung des ersten Photoinitiators oberhalb der Absorption des ersten Photoinitiators und der nach der Aktivierung gebildeten Zerfallsprodukte liegt, so dass der zweite Photoinitiator nach Aktivieren der Masse in Schritt c) in der Masse eine Absorption von aktinischer Strahlung der zweiten Wellenlänge λ₂ aufweist, die für eine Aktivierung des zweiten Photoinitiators in Schritt e) ausreichend ist, wobei in der Masse eine Hautbildung stattfindet.

8. Verfahren nach Anspruch 7, **dadurch gekennzeichnet, dass** das Aktivieren der Masse in Schritt c) mit aktinischer Strahlung einer Wellenlänge λ₁ in einem Bereich von 400 bis 600 nm erfolgt, vorzugsweise bei 460 ± 20 nm, bevorzugt unter Verwendung einer Strahlungsquelle mit singulärem Emissionspeak.

9. Verfahren nach Anspruch 7 oder 8, **dadurch gekennzeichnet, dass** die Masse in Schritt e) durch Bestrahlen mit aktinischer Strahlung einer Wellenlänge λ₂ in einem Bereich von 200 bis 400 nm fixiert wird, vorzugsweise bei 365 ± 20 nm, bevorzugt unter Verwendung einer Strahlungsquelle mit singulärem Emissionspeak.

10. Verfahren nach einem der Ansprüche 7 bis 9, **dadurch gekennzeichnet, dass** das erste und/oder das zweite Substrat ein elektro-optisches Bauteil ist, bevorzugt ein Kameramodul.

11. Verwendung der kationisch härtbaren Masse gemäß einem der Ansprüche 1 bis 6 zum Fügen, Vergießen, Abformen, Abdichten und/oder Beschichten von Substraten, wobei die Masse durch Bestrahlung mit aktinischer Strahlung einer ersten Wellenlänge λ₁ in einem Bereich von 400 bis 600 nm aktivierbar und durch anschließende Bestrahlung mit aktinischer Strahlung einer zweiten Wellenlänge λ₂ in einem Bereich von 200 bis 400 nm fixierbar ist, wobei die zweite Wellenlänge λ₂ kürzer als die erste Wellenlänge λ₁ ist.

## Claims

1. A cationically curable composition comprising
a) at least one cationically polymerizable component;
b) a first photoinitiator releasing an acid when irradiated with actinic radiation of a first wavelength λ₁;
c) a second photoinitiator releasing an acid when irradiated with actinic radiation of a second wavelength λ₂, wherein the second photoinitiator comprises an aryl sulfonium salt,
wherein the second wavelength λ₂ is shorter than the first wavelength λ₁, wherein the first and the second photoinitiators are selected such that the first photoinitiator can be activated at a first wavelength λ₁ of 460 nm without the second photoinitiator being activated simultaneously, and wherein, after the activation of the first photoinitiator, an absorption band of the second photoinitiator at a wavelength λ₂ of 365 nm is above the absorption of the first photoinitiator and the decomposition products formed after the activation so that, after irradiation of the composition with actinic radiation of the first wavelength λ₁, the second photoinitiator shows an absorption of actinic radiation of the second wavelength λ₂ in the composition that is sufficient to activate the second photoinitiator and to fix the composition, wherein skin formation takes place in the composition.

2. The composition according to claim 1, **characterized in that** the cationically polymerizable component comprises a compound that is selected from the group consisting of epoxy-containing compounds, oxetane-containing compounds and vinyl ethers, as well as combinations thereof, optionally together with a polyol as a reactive flexibilizer.

3. The composition according to claim 1 or 2, **characterized in that** the first photoinitiator is a metallocenium compound, preferably a ferrocenium salt.

4. The composition according to any of the preceding claims, **characterized in that** the composition further comprises a peroxide as an accelerator for curing of the composition.

5. The composition according to any of the preceding claims, **characterized in that** the composition further comprises one or more radically polymerizable compounds based on (meth)acrylates in a proportion of up to 50 wt-%, based on the total weight of the composition, and a radical photoinitiator, wherein the radical photoinitiator can be activated by irradiation with actinic radiation at the wavelength λ₂, but not at the wavelength λ₁.

6. The composition according to any of the preceding claims, **characterized in that** the composition consists of the following components, each based on the total weight of the composition:
a) at least one cationically polymerizable component (A) in a proportion of 5 to 99.98 wt-%, wherein the cationically polymerizable component (A) is preferably selected from the group consisting of epoxy-containing compounds (A1), oxetane-containing compounds (A2), vinyl ethers (A3) and combinations thereof, optionally together with an alcohol as a reactive flexibilizer (A4) in a proportion of 0 to 80 wt-%;
b) the first photoinitiator (B1) in a proportion of 0.01 to 5 wt-%, preferably a ferrocenium salt;
c) the second photoinitiator (B2) in a proportion of 0.01 to 5 wt-%, preferably an aryl sulfonium salt, an aryl iodonium salt and combinations thereof;
d) a sensitizer (C1) for the second photoinitiator (B2) in a proportion of 0 to 5 wt-%;
e) a peroxide as an accelerator (C2) for curing of the composition in a proportion of 0 to 5 wt-%;
f) at least one radically polymerizable compound (D) in a proportion of 0 to 50 wt-%, preferably 5 to 50 wt-%, more preferably based on a (meth)acrylate;
g) a radical photoinitiator (E) in a proportion of 0 to 5 wt-%, preferably 0.01 to 5 wt-%; and
h) further additives (C) in a proportion of 0 to 70 wt-%, preferably further additives from the group of fillers, colorants, pigments, anti-ageing agents, fluorescent agents, stabilizers, accelerators, adhesion promoters, drying agents, crosslinking agents, flow improvers, wetting agents, thixotropic agents, diluents, non-reactive flexibilizers, non-reactive polymeric thickeners, flame retardants, corrosion inhibitors, plasticizers and tackifiers.

7. A method for the joining, casting, molding, sealing and coating of substrates using a cationically curable composition, the method comprising the following steps:
a) providing a cationically curable composition according to any of the preceding claims;
b) dosing the composition onto a first substrate;
c) activating the composition by irradiation with actinic radiation of a first wavelength λ₁;
d) optionally supplying a second substrate to the activated composition on the first substrate to form a substrate composite, and, furthermore, optionally aligning both substrates with one another;
e) fixing the activated composition by irradiation with actinic radiation of a second wavelength λ₂; and
f) optionally heating the fixed composition on the first substrate or in the substrate composite,
**characterized in that** the cationically curable composition comprises at least one cationically polymerizable component and a first photoinitiator releasing an acid when irradiated with actinic radiation of a first wavelength λ₁, as well as a second photoinitiator releasing an acid when irradiated with actinic radiation of a second wavelength λ₂, wherein the second wavelength λ₂ is shorter than the first wavelength λ₁,
wherein the first and the second photoinitiators are selected such that the first photoinitiator can be activated at a first wavelength λ₁ of 460 nm without the second photoinitiator being activated simultaneously, and wherein, after the activation of the first photoinitiator, an absorption band of the second photoinitiator at a wavelength λ₂ of 365 nm is above the absorption of the first photoinitiator and the decomposition products formed after the activation so that the second photoinitiator, after activation of the composition in step c), shows an absorption of actinic radiation of the second wavelength λ₂ in the composition that is sufficient to activate the second photoinitiator in step e), wherein skin formation takes place in the composition.

8. The method according to claim 7, **characterized in that** the composition is activated in step c) with actinic radiation of a wavelength λ₁ ranging from 400 to 600 nm, preferably at 460 ± 20 nm, preferably by using a radiation source with a singular emission peak.

9. The method according to claim 7 or 8, **characterized in that** in step e) the composition is fixed by irradiation with actinic radiation of a wavelength λ₂ ranging from 200 to 400 nm, preferably at 365 ± 20 nm, preferably by using a radiation source with a singular emission peak.

10. The method according to any of claims 7 to 9, **characterized in that** the first and/or the second substrate is an electro-optic component, preferably a camera module.

11. Use of the cationically curable composition according to any of claims 1 to 6 for the joining, casting, molding, sealing and/or coating of substrates, wherein the composition can be activated by irradiation with actinic radiation of a first wavelength λ₁ ranging from 400 to 600 nm and fixed by subsequent irradiation with actinic radiation of a second wavelength λ₂ ranging from 200 to 400 nm, wherein the second wavelength λ₂ is shorter than the first wavelength λ₁.

## Revendications

1. Masse durcissable par voie cationique, comprenant
a) au moins un composant polymérisable par voie cationique ;
b) un premier photo-initiateur qui libère un acide lors d'une irradiation par un rayonnement actinique d'une première longueur d'onde λ₁ ;
c) un deuxième photo-initiateur qui libère un acide lors d'une irradiation par un rayonnement actinique d'une deuxième longueur d'onde λ₂, le deuxième photo-initiateur comprenant un sel d'arylsulfonium ;
la deuxième longueur d'onde λ₂ étant plus courte que la première longueur d'onde λ₁, le premier et le deuxième photo-initiateur étant choisis de telle sorte que le premier photo-initiateur est activable à une première longueur d'onde λ₁ de 460 nm sans activer simultanément le deuxième photo-initiateur, et une bande d'absorption du deuxième photo-initiateur à une longueur d'onde λ₂ de 365 nm après l'activation du premier photo-initiateur étant supérieure à l'absorption du premier photo-initiateur et des produits de décomposition formés après l'activation, de sorte que, après irradiation de la masse par un rayonnement actinique de première longueur d'onde λ₁ , le deuxième photo-initiateur présente dans la masse une absorption du rayonnement actinique de deuxième longueur d'onde λ₂ suffisante pour activer le deuxième photo-initiateur et fixer la masse, une formation de peau étant réalisée dans la masse.

2. Masse selon la revendication 1, **caractérisée en ce que** le composant polymérisable par voie cationique comprend un composé choisi dans le groupe constitué par les composés contenant des époxydes, les composés contenant des oxétanes et les éthers vinyliques, ainsi que leurs combinaisons, facultativement ensemble avec un polyol en tant qu'agent flexibilisant réactif.

3. Masse selon la revendication 1 ou 2, **caractérisée en ce que** le premier photo-initiateur est un composé de métallocénium, de préférence un sel de ferrocénium.

4. Masse selon l'une des revendications précédentes, **caractérisée en ce que** la masse comprend en outre un peroxyde comme accélérateur pour le durcissement de la masse.

5. Masse selon l'une des revendications précédentes, **caractérisée en ce que** la masse comprend en outre un ou plusieurs composés polymérisables par voie radicalaire à base de (méth)acrylates dans une proportion jusqu'à 50 % en poids par rapport au poids total de la masse, et un photo-initiateur radicalaire, le photo-initiateur radicalaire étant activable par irradiation avec un rayonnement actinique à la longueur d'onde λ₂, mais pas à la longueur d'onde λ₁.

6. Masse selon l'une des revendications précédentes, **caractérisée en ce que** la masse est constituée des composants suivants, chacun par rapport au poids total de la masse :
a) au moins un composant polymérisable par voie cationique (A) dans une proportion de 5 à 99,98 % en poids, le composant polymérisable par voie cationique (A) étant de préférence choisi dans le groupe constitué par les composés contenant des époxydes (A1), les composés contenant des oxétanes (A2), les éthers vinyliques (A3) ainsi que leurs combinaisons, facultativement avec un alcool en tant qu'agent flexibilisant réactif (A4) dans une proportion de 0 à 80 % en poids ;
b) le premier photo-initiateur (B1) dans une proportion de 0,01 à 5 % en poids, de préférence un sel de ferrocénium ;
c) le deuxième photo-initiateur (B2) dans une proportion de 0,01 à 5 % en poids, de préférence un sel d'arylsulfonium, un sel d'aryliodonium et leurs combinaisons ;
d) un sensibilisateur (C1) pour le deuxième photo-initiateur (B2) dans une proportion de 0 à 5 % en poids ;
e) un peroxyde en tant qu'accélérateur (C2) pour le durcissement de la masse, dans une proportion de 0 à 5 % en poids ;
f) au moins un composé polymérisable par voie radicalaire (D) dans une proportion de 0 à 50 % en poids, de préférence de 5 à 50 % en poids, de préférence encore à base d'un (méth)acrylate ;
g) un photo-initiateur radicalaire (E) dans une proportion de 0 à 5 % en poids, de préférence de 0,01 à 5 % en poids ; et
h) d'autres additifs (C) dans une proportion de 0 à 70 % en poids, de préférence d'autres additifs du groupe des charges, des colorants, des pigments, des agents de protection contre le vieillissement, des agents fluorescents, des stabilisateurs, des accélérateurs, des promoteurs d'adhésion, des desséchants, des réticulants, des améliorateurs d'écoulement, des agents mouillants, des agents thixotropes, des diluants, des agents flexibilisants non réactifs, des épaississants polymères non réactifs, des agents ignifuges, des inhibiteurs de corrosion, des plastifiants et des agents tackifiants.

7. Procédé d'assemblage, de coulage, de moulage, d'étanchement et de revêtement de substrats en utilisant une masse durcissable par voie cationique, le procédé comprenant les étapes suivantes :
a) fournissement d'une masse durcissable par voie cationique selon l'une des revendications précédentes ;
b) dosage de la masse sur un premier substrat ;
c) activation de la masse par irradiation avec un rayonnement actinique d'une première longueur d'onde λ₁ ;
d) apport facultatif d'un deuxième substrat à la masse activée sur le premier substrat pour former un ensemble de substrats, et en outre alignement facultatif des deux substrats l'un par rapport à l'autre ;
e) fixation de la masse activée par irradiation avec un rayonnement actinique d'une deuxième longueur d'onde λ₂ ; et
f) chauffage facultatif de la masse fixée sur le premier substrat ou dans l'ensemble de substrats,
**caractérisé en ce que** la masse durcissable par voie cationique comprend au moins un composant polymérisable par voie cationique et un premier photo-initiateur qui libère un acide lors d'une irradiation par un rayonnement actinique d'une première longueur d'onde λ₁, et un deuxième photo-initiateur qui libère un acide lors d'une irradiation par un rayonnement actinique d'une deuxième longueur d'onde λ₂, la deuxième longueur d'onde λ₂ étant plus courte que la première longueur d'onde λ₁,
le premier et le deuxième photo-initiateur étant choisis de telle sorte que le premier photo-initiateur est activable à une première longueur d'onde λ₁ de 460 nm sans activer simultanément le deuxième photo-initiateur, et une bande d'absorption du deuxième photo-initiateur à une longueur d'onde λ₂ de 365 nm après l'activation du premier photo-initiateur étant supérieure à l'absorption du premier photo-initiateur et des produits de décomposition formés après l'activation, de sorte que, après l'activation de la masse à l'étape c), le deuxième photo-initiateur présente dans la masse une absorption du rayonnement actinique de deuxième longueur d'onde λ₂ suffisante pour activer le deuxième photo-initiateur à l'étape e), une formation de peau étant réalisée dans la masse.

8. Procédé selon la revendication 7, **caractérisé en ce que** l'activation de la masse à l'étape c) est réalisée avec un rayonnement actinique d'une longueur d'onde λ₁ dans une plage de 400 à 600 nm, de préférence à 460 ± 20 nm, de préférence en utilisant une source de rayonnement à pic d'émission unique.

9. Procédé selon la revendication 7 ou 8, **caractérisé en ce que** la masse est fixée à l'étape e) par irradiation avec un rayonnement actinique d'une longueur d'onde λ₂ dans une plage de 200 à 400 nm, de préférence à 365 ± 20 nm, de préférence en utilisant une source de rayonnement à pic d'émission singulier.

10. Procédé selon l'une des revendications 7 à 9, **caractérisé en ce que** le premier et/ou le deuxième substrat est un composant électro-optique, de préférence un module de caméra.

11. Utilisation de la masse durcissable par voie cationique selon l'une des revendications 1 à 6 pour l'assemblage, le coulage, le moulage, l'étanchement et/ou le revêtement de substrats, la masse étant activable par irradiation avec un rayonnement actinique d'une première longueur d'onde λ₁ dans une plage de 400 à 600 nm et étant apte à être fixée par irradiation ultérieure avec un rayonnement actinique d'une deuxième longueur d'onde λ₂ dans une plage de 200 à 400 nm, la deuxième longueur d'onde λ₂ étant plus courte que la première longueur d'onde λ₁.
